(19) Europäisches Patentamt
European Patent Office
Office européen des brevets

(11) **EP 3 719 047 A1**

(12) **EUROPÄISCHE PATENTANMELDUNG**

(43) Veröffentlichungstag:
**07.10.2020 Patentblatt 2020/41**

(51) Int Cl.:
**C08G 18/42** *(2006.01)* **C08G 18/76** *(2006.01)*
**C08J 9/00** *(2006.01)*

(21) Anmeldenummer: **19167527.1**

(22) Anmeldetag: **05.04.2019**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **Covestro Deutschland AG**
**51373 Leverkusen (DE)**

(72) Erfinder: **Die Erfindernennung liegt noch nicht vor**

(74) Vertreter: **Levpat**
**c/o Covestro AG**
**Gebäude 4825**
**51365 Leverkusen (DE)**

(54) **VERFAHREN ZUR HERSTELLUNG VON FLAMMGESCHÜTZTEN PUR-/PIR-SCHAUMSTOFFEN**

(57) Die vorliegende Erfindung betrifft flammgeschützte Polyurethan-Schaumstoffe bzw. Polyurethan/Polyisocyanurat-Schaumstoffe (im Folgenden einzeln oder gemeinsam auch als "PUR-/PIR-Schaumstoffe" bezeichnet), sowie Verfahren zur Herstellung von PUR-/PIR-Schaumstoffen durch die Umsetzung eines Reaktionsgemisches enthaltend

**A1**
eine Isocyanat-reaktive Komponente
**A2**
Treibmittel
**A3**
Katalysator
**A4**
gegebenenfalls Additiv
**A5**
Flammschutzmittel
mit

**B**
einer Isocyanatkomponente,
wobei die Herstellung bei einer Kennzahl von 80 bis 600 erfolgt,
dadurch gekennzeichnet, dass das Flammschutzmittel **A5** eine Komponente **A5.1** enthält, wobei die Komponente **A5.1** mindestens eine Verbindung ausgewählt aus der Gruppe bestehend aus Dibutylhydroxymethylphosphonat, dem Dimer von Dibutylhydroxymethylphosphonat, Butylethylhydroxymethylphosphonat mit einem molaren Verhältnis von Ethyl/Butyl von höchstens 15/85, acetyliertes Dibutylhydroxymethylphosphonat, dem Dimer des acetylierten Dibutylhydroxymethylphosphonat, acetyliertes Diethylhydroxymethylphosphonat und dem Dimer des acetylierten Diethylhydroxymethylphosphonat enthält.

EP 3 719 047 A1

**EP 3 719 047 A1**

**Beschreibung**

Die vorliegende Erfindung betrifft flammgeschützte Polyurethan-Schaumstoffe bzw. Polyurethan-/Polyisocyanurat-Schaumstoffe (im Folgenden einzeln oder gemeinsam auch als "PUR-/PIR-Schaumstoffe" bezeichnet) enthaltend mindestens eine Verbindung ausgewählt aus der Gruppe bestehend aus Dibutylhydroxymethylphosphonat, dem Dimer von Dibutylhydroxymethylphosphonat, Butylethylhydroxymethylphosphonat mit einem molaren Verhältnis von Ethyl/Butyl von höchstens 15/85, acetyliertes Dibutylhydroxymethylphosphonat, dem Dimer des acetylierten Dibutylhydroxymethylphosphonat, acetyliertes Diethylhydroxymethylphosphonat und dem Dimer des acetylierten Diethylhydroxymethylphosphonat, sowie Verfahren zur Herstellung von PUR-/PIR-Schaumstoffen.

So wie alle organischen Polymere sind auch PUR-/PIR-Schaumstoffe brennbar, wobei die große Oberfläche pro Masseneinheit in Schaumstoffen dieses Verhalten noch verstärkt. PUR-/PIR-Schaumstoffe werden häufig als Isolationsmaterialien eingesetzt, beispielsweise als Dämmstoff in der Bauindustrie. In vielen Einsatzgebieten von PUR-/PIR-Schaumstoffen ist daher eine Brandschutzausrüstung durch zugesetzte Flammschutzmittel erforderlich.

Als Flammschutzmittel werden halogenhaltige Verbindungen sowie Stickstoff- und Phosphorverbindungen bevorzugt eingesetzt. Verbindungen, die Halogene enthalten, und niedervalente Phosphorverbindungen gelten als typische Vertreter der Flammschutzmittel, die Flammen ersticken. Höhervalente Phosphorverbindungen sollen eine katalytische Spaltung der Polyurethane bewirken und dadurch zur Bildung einer festen, polyphosphathaltigen, verkohlten Oberfläche führen. Diese Intumeszenzschicht schützt das Material vor weiterer Verbrennung (G.W. Becker, D. Braun: Polyurethane. In: G. Oertel (Ed.), Kunststoff Handbuch, München, Carl Hanser Verlag, 1983, 2, 104-1-5).

Ein Nachteil insbesondere der halogenhaltigen Vertreter dieser Klassen ist allerdings, dass sie persistent und relativ flüchtig sind und so aus dem Schaum migrieren können (J.C. Quagliano, V.M. Wittemberg, I.C.G. Garcia: Recent Advances on the Utilization of Nanoclays and Organophosphorus Compounds in Polyurethane Foams for Increasing Flame Retardancy. In: J. Njuguna (Ed.), Structural Nanocomposites, Engineering Materials, Berlin Heidelberg, Springer Verlag, 2013, 1, 249-258) und bei der Verwendung im Verbrennungsprozess korrosive Halogenwasserstoffsäure entsteht.

Aufgrund der zunehmenden Verbreitung von organischen Halogenverbindungen mit teilweise gesundheitsschädlicher Wirkung in der Umwelt richtet sich das Interesse auf halogenfreie Alternativen, z.B. auf halogenfreie Phosphatester und Phosphitester (S.V. Levchik, E.D. Weil: A Review of Recent Progress in Phosphorus-based Flame Retardants, J. Fire Sci., 2006, 24, 345-364, M. M Velencoso et al. Angewandte Chemie Int. Ed. 2018, 57, 10450-10467) und auf roten Phosphor.

Am weitesten verbreitet sind PUR- und PIR-Schaumstoffe, die mit organischen Phosphaten wie Tris(2-chlorisopropyl)phosphat (TCPP) und Triethylphosphat (TEP) flammwidrig eingestellt sind. Auch organische Phosphonsäureester wie Dimethylpropanphosphonat (DMPP, DE 44 18 307 A1) oder Diethylethylphosphonat (DEEP, US 5,268,393) und andere (WO 2006/108833 A1 und EP 1 142 940 A2) sind als halogenfreie Flammschutzmittel für Hartschaumstoffe auf Isocyanatbasis beschrieben. Festes Ammoniumpolyphosphat (APP) wurde ebenfalls bereits als Flammschutzmittel eingesetzt (US 2014/066532 A1 und US 5,470,891), Formulierungen auf dieser Basis sind auf Grund der Neigung von APP zur Sedimentation nicht lagerstabil.

Aber auch diese halogenfreien Alternativen haben Nachteile: Teilweise sind sie empfindlich gegenüber Hydrolyse unter den für PUR-/PIR-Schaumstoffsysteme typischen alkalischen Bedingungen, oder die Wirksamkeit ist nicht zufriedenstellend. TEP ist ein starker Weichmacher und führt bei den für eine ausreichende Flammschutzwirkung notwendigen Mengen oft zu nicht ausreichender Druckfestigkeit von Schaumstoffen. Roter Phosphor weist Nachteile auf, z.B. im Hinblick auf schnelle Absorption von Feuchtigkeit und schnelle Oxidation, was zu einem Verlust des Flammschutzes und ggf. zur Bildung giftiger Phosphine führt, und neigt außerdem zu Pulverexplosionen. Oft wird roter Phosphor mikroverkapselt um diese Probleme zu beseitigen. (L. Chen, Y.-Z. Wang: A review on flame retardant technology in China. Part 1: development of flame retardants, Polym. Adv. Technol., 2010, 21, 1-26).

US 3,385,801 und WO 2010/080425 offenbaren die Herstellung von Dialkyl-$\alpha$-hydroxyalkylphosphonaten und deren Verwendung als Flammschutzmittel. Es werden keine Angaben zu einem Einfluss der Dialkyl-$\alpha$-hydroxyalkylphosphonate auf die mechanischen Eigenschaften, speziell die Elastizität und die Zähigkeit bei Zugbelastung von PolyurethanSchaumstoffen gegeben.

Die Aufgabe der vorliegenden Erfindung ist es, die Herstellung von PUR-/PIR-Schaumstoffen mit halogenfreien Flammschutzmitteln zu ermöglichen, wobei die PUR-/PIR-Schaumstoffe einen guten Flammschutz und verbesserte mechanische Eigenschaften aufweisen, wobei bevorzugt keine als kanzerogen, mutagen oder reproduktionstoxisch klassifizierten Stoffe eingesetzt werden.

Diese Aufgabe konnte gelöst werden durch den erfindungsgemäßen Einsatz einer Komponente A5.1 als Flammschutzmittel in der Herstellung von PUR-/PIR-Schaumstoffen.

Gegenstand der Erfindung ist ein Verfahren zur Herstellung von PUR-/PIR-Schaumstoffen durch die Umsetzung eines Reaktionsgemisches enthaltend

**A1**    eine Isocyanat-reaktive Komponente

**A2**    Treibmittel

**A3**    Katalysator

**A4**    gegebenenfalls Additiv

**A5**    Flammschutzmittel

mit

**B**    einer Isocyanatkomponente,

wobei die Herstellung bei einer Kennzahl von 80 bis 600 erfolgt,
dadurch gekennzeichnet, dass das Flammschutzmittel **A5** eine Komponente **A5.1** enthält, wobei die Komponente **A5.1** mindestens eine Verbindung ausgewählt aus der Gruppe bestehend aus Dibutylhydroxymethylphosphonat, dem Dimer von Dibutylhydroxymethylphosphonat, Butylethylhydroxymethylphosphonat mit einem molaren Verhältnis von Ethyl/Butyl von höchstens 15/85, acetyliertes Dibutylhydroxymethylphosphonat, dem Dimer des acetylierten Dibutylhydroxymethylphosphonat, acetyliertes Diethylhydroxymethylphosphonat und dem Dimer des acetylierten Diethylhydroxymethylphosphonat enthält.

Überraschenderweise wurde gefunden, dass die erfindungsgemäßen PUR-/PIR-Schaumstoffe enthaltend eine Komponente **A5.1** einen guten Flammschutz trotz niedrigen Phosphorgehalten aufweisen. In einer besonderen Ausführungsform werden ebenfalls die kinetischen Eigenschaften der erfindungsgemäßen Formulierungen zur Herstellung von PUR-/PIR-Schaumstoffe verbessert. In einer weiteren besonderen Ausführungsform werden ebenfalls die mechanischen Eigenschaften, wie Zugfestigkeit, Bruchdehnung, Zähigkeit und Offenzelligkeit der PUR-/PIR-Schaumstoffe verbessert.

Als Isocyanat-reaktive Komponente **A1** wird mindestens eine Verbindung ausgewählt aus der Gruppe bestehend aus Polyetherpolyolen, Polyesterpolyolen, Polyetheresterpolyolen, Polycarbonatpolyolen und Polyether-Polycarbonatpolyolen eingesetzt. Bevorzugt sind Polyesterpolyole und/oder Polyetherpolyole. Die Isocyanat-reaktive Komponente **A1** kann bevorzugt eine Hydroxylzahl zwischen 25 bis 800 mg KOH/g, insbesondere 50 bis 500 mg KOH/g, besonders bevorzugt 100 bis 400 mg KOH/g und ganz besonders bevorzugt 100 bis 300 mg KOH/g aufweisen. Vorzugsweise weist die einzelne Polyolkomponente ein zahlenmittleres Molekulargewicht von 120 g/mol bis 6000 g/mol, insbesondere 400 g/mol bis 2000 g/mol und besonders bevorzugt 400 g/mol bis 700 g/mol auf.

Die zahlenmittlere Molmasse $M_n$ (auch: Molekulargewicht) wird im Rahmen dieser Erfindung durch Gelpermeationschromatographie nach DIN 55672-1 (August 2007) bestimmt.

Die OH-Zahl (auch: Hydroxylzahl) gibt im Falle eines einzelnen zugesetzten Polyols dessen OH-Zahl an. Angaben der OH-Zahl für Mischungen beziehen sich auf die zahlenmittlere OH-Zahl der Mischung, berechnet aus den OH-Zahlen der einzelnen Komponenten in ihren jeweiligen molaren Anteilen. Die OH-Zahl gibt die Menge an Kaliumhydroxid in Milligramm an, welche der bei einer Acetylierung von einem Gramm Substanz gebundenen Menge Essigsäure gleichwertig ist. Die OH-Zahl wird im Rahmen der vorliegenden Erfindung nach der Norm DIN 53240-1 (Juni 2013) bestimmt.

"Funktionalität" bezeichnet im Rahmen der vorliegenden Erfindung die theoretische, aus den bekannten Einsatzstoffen und deren Mengenverhältnissen berechnete mittlere Funktionalität (Anzahl an gegenüber Isocyanaten bzw. gegenüber Polyolen reaktiven Funktionen im Molekül).

Das Äquivalentgewicht gibt das Verhältnis der zahlenmittleren Molekularmasse und der Funktionalität der Isocyanat-reaktiven Komponente an. Die Angaben des Äquivalentgewichts für Mischungen berechnen sich aus Äquivalentgewichten der einzelnen Komponenten in ihren jeweiligen molaren Anteilen und beziehen sich auf das zahlenmittlere Äquivalentgewicht der Mischung.

Die Polyesterpolyole der Komponente **A1** können beispielsweise Polykondensate aus mehrwertigen Alkoholen, vorzugsweise Diolen, mit 2 bis 12 Kohlenstoffatomen, vorzugsweise mit 2 bis 6 Kohlenstoffatomen, und Polycarbonsäuren, wie z.B. Di-, Tri- oder sogar Tetracarbonsäuren, oder Hydroxycarbonsäuren oder Lactonen sein, bevorzugt werden aromatische Dicarbonsäuren oder Gemische aus aromatischen und aliphatischen Dicarbonsäuren verwendet. Anstelle der freien Polycarbonsäuren können auch die entsprechenden Polycarbonsäureanhydride oder entsprechende Polycarbonsäureester von niederen Alkoholen zur Herstellung der Polyester verwendet werden. Bevorzugt verwendet werden Phthalsäureanhydrid, Terephthalsäure und/oder Isophthalsäure.

Als Carbonsäuren kommen insbesondere in Betracht: Bernsteinsäure, Glutarsäure, Adipinsäure, Korksäure, Azelainsäure, Sebazinsäure, Decandicarbonsäure, Tetrahydrophthalsäure, Hexahydrophthalsäure, Cyclohexandicar-

EP 3 719 047 A1

bonsäure, Tetrachlorphthalsäure, Itaconsäure, Malonsäure, Furandicarbonsäuren, 2-Methylbernsteinsäure, 3,3-Diethylglutarsäure, 2,2-Dimethylbernsteinsäure, Dodekandisäure, Endomethylentetrahydrophthalsäure, Dimerfettsäure, Trimerfettsäure, Zitronensäure, Trimellithsäure, Benzoesäure, Trimellitsäure, Maleinsäure, Fumarsäure, Phthalsäure, Isophthalsäure und Terephthalsäure. Verwendet werden können ebenso Derivate dieser Carbonsäuren, wie beispielsweise Dimethylterephthalat. Die Carbonsäuren können dabei sowohl einzeln als auch im Gemisch verwendet werden. Als Carbonsäuren werden bevorzugt Adipinsäure, Sebacinsäure und/oder Bernsteinsäure, besonders bevorzugt Adipinsäure und/oder Bernsteinsäure, verwendet.

Hydroxycarbonsäuren, die als Reaktionsteilnehmer bei der Herstellung eines Polyesterpolyols mit endständigen Hydroxylgruppen mitverwendet werden können, sind beispielsweise Hydroxycapronsäure, Hydroxybuttersäure, Hydroxydecansäure, Hydroxystearinsäure und dergleichen. Geeignete Lactone sind unter anderem Caprolacton, Propiolacton, Butyrolacton und Homologe.

Zur Herstellung der Polyesterpolyole kommen insbesondere auch biobasierte Ausgangsstoffe und/oder deren Derivate in Frage, wie z. B. Rizinusöl, Polyhydroxyfettsäuren, Ricinolsäure, Hydroxyl-modifizierte Öle, Weintraubenkernöl, schwarzem Kümmelöl, Kürbiskernöl, Borretschsamenöl, Sojabohnenöl, Weizensamenöl, Rapsöl, Sonnenblumenkernöl, Erdnussöl, Aprikosenkernöl, Pistazienöl, Mandelöl, Olivenöl, Macadamianussöl, Avocadoöl, Sanddornöl, Sesamöl, Hanföl, Haselnussöl, Primelöl, Wildrosenöl, Distelöl, Walnussöl, Fettsäuren, hydroxylmodifizierte und epoxidierte Fettsäuren und Fettsäureester, beispielsweise basierend auf Myristoleinsäure, Palmitoleinsäure, Ölsäure, Vaccensäure, Petroselinsäure, Gadoleinsäure, Erukasäure, Nervonsäure, Linolsäure, alpha- und gamma-Linolensäure, Stearidonsäure, Arachidonsäure, Timnodonsäure, Clupanodonsäure und Cervonsäure. Insbesondere bevorzugt sind Ester der Rizinolsäure mit mehrfunktionellen Alkoholen, z.B. Glycerin. Bevorzugt ist auch die Verwendung von Mischungen solcher biobasierten Säuren mit anderen Carbonsäuren, z.B. Phthalsäuren.

Beispiele für geeignete Diole sind Ethylenglykol, Butylenglykol, Diethylenglykol, Triethylenglykol, Polyalkylenglykole wie Polyethylenglykol, weiterhin 1,2-Propandiol, 1,3-Propandiol, Cyclohexandimethanol, 1,3-Butandiol, 1,4-Butandiol, 1,6-Hexandiol und Isomere, Neopentylglykol oder Hydroxypivalinsäureneopentylglykolester. Vorzugsweise verwendet werden Ethylenglykol, Diethylenglykol, 1,4-Butandiol, 1,5-Pentandiol, 1,6-Hexandiol oder Mischungen aus mindestens zwei der genannten Diole, insbesondere Mischungen aus 1,4-Butandiol, 1,5-Pentandiol und 1,6-Hexandiol.

Daneben können auch Polyole wie Trimethylolpropan, Glycerin, Erythrit, Pentaerythrit, Trimethylolbenzol oder Trishydroxyethylisocyanurat eingesetzt werden, wobei Glycerin und Trimethylolpropan bevorzugt sind.

Es können zusätzlich auch einwertige Alkanole mit verwendet werden.

Erfindungsgemäß eingesetzte Polyetherpolyole werden nach dem Fachmann bekannten Herstellungsmethoden erhalten, wie beispielsweise durch anionische Polymerisation von einem oder mehreren Alkylenoxiden mit 2 bis 4 Kohlenstoffatomen mit Alkalihydroxiden, wie Natrium- oder Kaliumhydroxid, Alkalialkoholaten, wie Natriummethylat, Natrium- oder Kaliumethylat oder Kaliumisopropylat, oder aminischen Alkoxylierungs-Katalysatoren, wie Dimethylethanolamin (DMEOA), Imidazol und/oder Imidazolderivate, unter Verwendung mindestens eines Startermoleküls, das 2 bis 8, vorzugsweise 2 bis 6 reaktive Wasserstoffatome gebunden enthält.

Geeignete Alkylenoxide sind beispielsweise Tetrahydrofuran, 1,3-Propylenoxid, 1,2- bzw. 2,3-Butylenoxid, Styroloxid und vorzugsweise Ethylenoxid und 1,2-Propylenoxid. Die Alkylenoxide können einzeln, alternierend nacheinander oder als Mischungen verwendet werden. Bevorzugte Alkylenoxide sind Propylenoxid und Ethylenoxid, besonders bevorzugt ist Ethylenoxid. Die Alkylenoxide können in Kombination mit $CO_2$ umgesetzt werden.

Als Startermoleküle kommen beispielsweise in Betracht: Wasser, organische Dicarbonsäuren, wie Bernsteinsäure, Adipinsäure, Phthalsäure und Terephthalsäure, aliphatische und aromatische, gegebenenfalls N-mono-, N,N- und N,N'-dialkylsubstituierte Diamine mit 1 bis 4 Kohlenstoffatomen im Alkylrest, wie gegebenenfalls mono- und dialkylsubstituiertes Ethylendiamin, Diethylentriamin, Triethylentetramin, 1,3-Propylendiamin, 1,3- bzw. 1,4-Butylendiamin, 1,2-, 1,3-, 1,4-, 1,5-und 1,6-Hexamethylendiamin, Phenylendiamine, 2,3-, 2,4- und 2,6-Toluylendiamin und 2,2'-, 2,4'- und 4,4'-Diaminodiphenylmethan.

Vorzugsweise verwendet werden zwei oder mehrwertige Alkohole, wie Ethandiol, 1,2- und 1,3-Propandiol, Diethylenglykol, Dipropylenglykol, 1,4-Butandiol, 1,6-Hexandiol, Triethanolamin, Bisphenole, Glycerin, Trimethylolpropan, Pentaerythrit, Sorbit und Saccharose.

Verwendbare Polycarbonatpolyole sind Hydroxylgruppen aufweisende Polycarbonate, zum Beispiel Polycarbonatdiole. Diese entstehen in der Reaktion von Kohlensäurederivaten, wie Diphenylcarbonat, Dimethylcarbonat oder Phosgen, mit Polyolen, bevorzugt Diolen.

Beispiele derartiger Diole sind Ethylenglykol, 1,2- und 1,3-Propandiol, 1,3- und 1,4-Butandiol, 1,6-Hexandiol, 1,8-Octandiol, Neopentylglykol, 1,4-Bishydroxymethylcyclohexan, 2-Methyl-1,3-propandiol, 2,2,4-Trimethylpentandiol-1,3, Dipropylenglykol, Polypropylenglykole, Dibutylenglykol, Polybutylenglykole, Bisphenole und lactonmodifizierte Diole der vorstehend genannten Art.

Statt oder zusätzlich zu reinen Polycarbonatdiolen können auch Polyether-Polycarbonatdiole eingesetzt werden, welche beispielsweise durch Copolymerisation von Alkylenoxiden, wie zum Beispiel Propylenoxid, mit $CO_2$ erhältlich sind.

4

Verwendbare Polyetheresterpolyole sind solche Verbindungen, die Ethergruppen, Estergruppen und OH-Gruppen enthalten. Organische Dicarbonsäuren mit bis zu 12 Kohlenstoffatomen sind zur Herstellung der Polyetheresterpolyole geeignet, vorzugsweise aliphatische Dicarbonsäuren mit 4 bis 6 Kohlenstoffatomen oder aromatische Dicarbonsäuren, die einzeln oder im Gemisch verwendet werden. Beispielhaft seien Korksäure, Azelainsäure, Decandicarbonsäure, Furandicarbonsäure, Maleinsäure, Malonsäure, Phthalsäure, Pimelinsäure und Sebacinsäure sowie insbesondere Glutarsäure, Fumarsäure, Bernsteinsäure, Adipinsäure, Phthalsäure, Terephthalsäure und Isoterephthalsäure genannt. Neben organischen Dicarbonsäuren können auch Derivate dieser Säuren, beispielsweise deren Anhydride sowie deren Ester und Halbester mit niedermolekularen, monofunktionellen Alkoholen mit 1 bis 4 Kohlenstoffatomen eingesetzt werden. Der anteilige Einsatz der oben genannten biobasierten Ausgangsstoffe, insbesondere von Fettsäuren bzw. Fettsäurederivaten (Ölsäure, Sojaöl etc.) ist ebenfalls möglich und kann Vorteile aufweisen, z.B. im Hinblick auf Lagerstabilität der Polyolformulierung, Dimensionsstabilität, Brandverhalten und Druckfestigkeit der Schäume.

Als weitere Komponente zur Herstellung der Polyetheresterpolyole werden Polyetherpolyole eingesetzt, die man durch Alkoxylieren von Startermolekülen wie mehrwertigen Alkoholen erhält. Die Startermoleküle sind mindestens difunktionell, können aber gegebenenfalls auch Anteile höherfunktioneller, insbesondere trifunktioneller, Startermoleküle enthalten.

Startermoleküle sind zum Beispiel Diole wie 1,2-Ethandiol, 1,3-Propandiol, 1,2-Propandiol, 1,4-Butandiol, 1,5-Pentendiol, 1,5-Pentandiol, Neopentylglykol, 1,6- Hexandiol, 1,7-Heptandiol, 1,8-Octandiol, 1,10-Decandiol, 2-Methyl-1,3-propandiol, 2,2-Dimethyl-1,3-propandiol, 3-Methyl-1,5-pentandiol, 2-Butyl-2-ethyl-1,3-propandiol, 2-Buten-1,4-diol und 2-Butin-1,4-diol, Etherdiole wie Diethylenglykol, Triethylenglykol, Tetraethylenglykol, Dibutylenglykol, Tributylenglykol, Tetrabutylenglykol, Dihexylenglykol, Trihexylenglykol, Tetrahexylenglykol und Oligomerengemische von Alkylenglykolen, wie Diethylenglykol. Auch Startermoleküle mit von OH verschiedenen Funktionalitäten können alleine oder in Mischung eingesetzt werden.

Neben den Diolen können als Startermoleküle für die Herstellung der Polyether auch Verbindungen mit mehr als 2 Zerewitinoff-aktiven Wasserstoffen, besonders mit zahlenmittleren Funktionalitäten von 3 bis 8, insbesondere von 3 bis 6 mitverwendet werden, zum Beispiel 1,1,1-Trimethylolpropan, Triethanolamin, Glycerin, Sorbitan und Pentaerythrit sowie auf Triolen oder Tetraolen gestartete Polyethylenoxidpolyole.

Polyetheresterpolyole können auch durch die Alkoxylierung, insbesondere durch Ethoxylierung und/oder Propoxylierung, von Reaktionsprodukten, die durch die Umsetzung von organischen Dicarbonsäuren und deren Derivaten sowie Komponenten mit Zerewitinoff-aktiven Wasserstoffen, insbesondere Diolen und Polyolen, erhalten werden, hergestellt werden. Als Derivate dieser Säuren können beispielsweise deren Anhydride eingesetzt werden, wie zum Beispiel Phthalsäureanhydrid.

Herstellungsverfahren der Polyole sind beispielsweise von Ionescu in "Chemistry and Technology of Polyols for Polyurethanes", Rapra Technology Limited, Shawbury 2005, S.55 ff. (Kap. 4: Oligo-Polyols for Elastic Polyurethanes), S. 263 ff. (Kap. 8: Polyester Polyols for Elastic Polyurethanes) und insbesondere auf S.321 ff. (Kap. 13: Polyether Polyols for Rigid Polyurethane Foams) und S.419 ff. (Kap. 16: Polyester Polyols for Rigid Polyurethane Foams) beschrieben worden. Es ist auch möglich, Polyester- und Polyetherpolyole über Glykolyse von geeigneten Polymer-Rezyklaten zu gewinnen. Geeignete Polyether-Polycarbonatpolyole und ihre Herstellung werden beispielsweise in der EP 2 910 585 A1, [0024] - [0041], beschrieben. Beispiele zu Polycarbonatpolyolen und ihre Herstellung finden sich unter anderem in der EP 1 359 177 A1. Die Herstellung geeigneter Polyetheresterpolyole ist unter anderem in der WO 2010/043624 A und in der EP 1 923 417 A beschrieben.

Weiterhin können in der Isocyanat-reaktiven Komponente **A1** niedermolekulare Isocyanat-reaktive Verbindungen enthalten sein, vorzugsweise können di- oder trifunktionelle Amine und Alkohole, bevorzugt Diole und/oder Triole mit Molmassen $M_n$ kleiner als 400 g/mol, insbesondere von 60 bis 300 g/mol, zum Einsatz kommen, z.B. Triethanolamin, Diethylenglykol, Ethylenglykol und Glycerin. Sofern zur Herstellung der Polyurethan-Hartschaumstoffe solche niedermolekularen Isocyanat-reaktiven Verbindungen Anwendung finden, z.B. in der Funktion als Kettenverlängerungsmittel und/oder Vernetzungsmittel kommen diese zweckmäßigerweise in einer Menge von bis zu 5 Gew.-%, bezogen auf das Gesamtgewicht der Komponente **A1,** zum Einsatz.

Neben den oben beschriebenen Polyolen und Isocyanat-reaktiven Verbindungen können in der Komponente **A1** weitere Isocyanat-reaktive Verbindungen enthalten sein, beispielsweise Graft-Polyole, Polyamine, Polyaminoalkohole und Polythiole. Selbstverständlich umfassen die beschriebenen Isocyanat-reaktiven Komponenten auch solche Verbindungen mit gemischten Funktionalitäten.

Die Komponente **A1** kann aus einer oder mehreren der oben genannten Isocyanat-reaktiven Komponenten bestehen.

Als Treibmittel **A2** kann physikalisches Treibmittel eingesetzt werden, wie beispielsweise niedrig siedende organische Verbindungen, wie z.B. Kohlenwasserstoffe, halogenierte Kohlenwasserstoffe, Ether, Ketone, Carbonsäureester oder Kohlensäureester. Geeignet sind insbesondere organische Verbindungen, welche gegenüber der Isocyanatkomponente **B** inert sind und Siedepunkte unter 100 °C, vorzugsweise unter 50 °C bei Atmosphärendruck aufweisen. Diese Siedepunkte haben den Vorteil, dass die organischen Verbindungen unter dem Einfluss der exothermen Polyadditionsreaktion verdampfen. Beispiele solcher, vorzugsweise verwendeten organischen Verbindungen sind Alkane, wie Heptan, Hexan, n- und iso-Pentan, vorzugsweise technische Gemische aus n- und iso-Pentanen, n- und iso-Butan und Propan, Cycloalkane, wie z. B. Cyclopentan und/oder Cyclohexan, Ether, wie z. B. Furan, Dimethylether und Diethylether, Ketone, wie z. B. Aceton und Methylethylketon, Carbonsäurealkylester, wie z. B. Methylformiat, Dimethyloxalat und Ethylacetat und halogenierte Kohlenwasserstoffe, wie z. B. Methylenchlorid, Dichlormonofluormethan, Difluormethan, Trifluormethan, Difluorethan, Tetrafluorethan, Chlordifluorethane, 1,1-Dichlor-2,2,2-trifluorethan, 2,2-Dichlor-2-fluorethan und Heptafluorpropan. Auch bevorzugt ist der Einsatz von (hydro)fluorierten Olefinen, wie z. B. HFO 1233zd(E) (Trans-1-chlor-3,3,3-trifluor-1-propen) oder HFO 1336mzz(Z) (cis-1,1,1,4,4,4-Hexafluor-2-buten) oder Additive wie FA 188 von 3M (1,1,1,2,3,4,5,5,5-Nonafluor-4-(trifluormethyl)pent-2-en). Auch Gemische zweier oder mehrerer der genannten organischen Verbindungen können verwendet werden. Die organischen Verbindungen können dabei auch in Form einer Emulsion aus kleinen Tröpfchen eingesetzt werden.

Als Treibmittel **A2** kann auch chemisches Treibmittel, wie beispielsweise Wasser, Carbonsäure und deren Gemische, verwendet werden. Diese reagieren mit Isocyanatgruppen unter Bildung des Treibgases, wie beispielsweise im Falle von Wasser entsteht dabei Kohlendioxid und im Falle von z. B. Ameisensäure entsteht dabei Kohlendioxid und Kohlenstoffmonoxid. Als Carbonsäure wird bevorzugt mindestens eine Verbindung, ausgewählt aus der Gruppe bestehend aus Ameisensäure, Essigsäure, Oxalsäure und Ricinolsäure, eingesetzt. Als chemisches Treibmittel wird besonders bevorzugt Wasser eingesetzt.

Vorzugsweise werden keine halogenierten Kohlenwasserstoffe als Treibmittel verwendet.

Als Treibmittel **A2** wird mindestens eine Verbindung, ausgewählt aus der Gruppe bestehend aus physikalischen und chemischen Treibmittel, eingesetzt. Bevorzugt wird nur physikalisches Treibmittel eingesetzt. In einer bevorzugten Ausführungsform weisen die eingesetzten Treibmittel **A2** ein mittleres global warming potential (GWP) von < 120, bevorzugt ein GWP von < 20 auf.

Als Katalysator **A3** zur Herstellung der PUR-/PIR-Schaumstoffe werden Verbindungen verwendet, welche die Reaktion der reaktiven Wasserstoffatome, insbesondere Hydroxylgruppen enthaltenden Verbindungen mit der Isocyanatkomponente **B** beschleunigen, wie z. B. tertiäre Amine oder Metallsalze. Die Katalysatorkomponenten können dem Reaktionsgemisch zudosiert oder auch ganz oder teilweise in der Isocyanat-reaktiven Komponente **A1** vorgelegt werden.

Verwendet werden beispielsweise tertiäre Amine, wie Triethylamin, Tributylamin, Dimethylbenzylamin, Dicyclohexylmethylamin, Dimethylcyclohexylamin, N, N ,N', N'-Tetramethyldiaminodiethylether, Bis-(dimethylaminopropyl)-harnstoff, N-Methyl- bzw. N-Ethylmorpholin, N-Cyclohexylmorpholin, N,N,N',N'-Tetramethylethylendiamin, N,N,N,N-Tetramethylbutandiamin, N, N, N, N-Tetramethylhexandiamin-1,6, Pentamethyldiethylentriamin, Bis[2-(dimethylamino)ethyl]ether, Dimethylpiperazin, N-Dimethylaminoethylpiperidin, 1,2-Dimethyl-imidazol, 1-Azabicyclo-(3,3,0)-octan, 1,4-Diaza-bi-cyclo-(2,2,2)-octan (Dabco) und Alkanolaminverbindungen, wie Triethanolamin, Triisopropanolamin, N-Methyl- und N-Ethyldiethanolamin, Dimethylaminoethanol, 2-(N,N-Dimethylaminoethoxy)ethanol, N,N',N"-Tris-(dialkylaminoalkyl)hexahydrotriazin, z.B. N,N',N"-Tris-(dimethylaminopropyl)hexahydrotriazin und Triethylendiamin.

Es können auch Metallsalze wie z. B. Alkali- oder Übergangsmetallsalze eingesetzt werden. Als Übergangsmetallsalze werden beispielsweise Zink-, Wismut-, Eisen-, Blei- oder bevorzugt Zinnsalze eingesetzt. Beispiele für eingesetzte Übergangsmetallsalze sind Eisen(II)-chlorid, Zinkchlorid, Bleioctoat, Zinndioctoat, Zinndiethylhexoat und Dibutylzinndilaurat. Besonders bevorzugt ist das Übergangsmetallsalz ausgewählt aus mindestens einer Verbindung aus der Gruppe bestehend aus Zinndioctoat, Zinndiethylhexoat und Dibutylzinndilaurat. Beispiele für Alkalimetallsalze sind Alkalialkoholate, wie z. B. Natriummethylat und Kaliumisopropylat, Alkalicarboxylate, wie z. B. Kaliumacetat, sowie Alkalimetallsalze von langkettigen Fettsäuren mit 10 bis 20 C-Atomen und gegebenenfalls seitenständigen OH-Gruppen. Bevorzugt als Alkalimetallsalz werden ein oder mehrere Alkalicarboxylate eingesetzt.

Als Katalysator **A3** kommen ferner in Betracht: Amidine, wie z. B. 2,3-Dimethyl-3,4,5,6-tetrahydropyrimidin, Tetraalkylammoniumhydroxide, wie z. B. Tetramethylammonium-hydroxid, Alkalihydroxide, wie z. B. Natriumhydroxid, und Tetraalkylammonium- oder Phosphoniumcarboxylate. Darüber hinaus sind Mannichbasen und Salze von Phenolen geeignete Katalysatoren. Es besteht auch die Möglichkeit, die Reaktionen ohne Katalyse ablaufen zu lassen. In diesem Fall wird die katalytische Aktivität von mit Aminen gestarteten Polyolen ausgenutzt.

Wird beim Verschäumen ein größerer Polyisocyanatüberschuss verwendet, kommen als Katalysatoren für die Trimerisierungsreaktion der überschüssigen NCO-Gruppen untereinander ferner in Betracht: Isocyanuratgruppen bildende Katalysatoren, beispielsweise Ammoniumionen- oder Alkalimetallsalze, speziell Ammonium- oder Alkalimetallcarboxylate, alleine oder in Kombination mit tertiären Aminen. Die Isocyanurat-Bildung führt zu besonders flammwidrigen PIR-Schaumstoffen.

Die oben genannten Katalysatoren können alleine oder in Kombination miteinander eingesetzt werden.

Gegebenenfalls können ein oder mehrere Additive als Komponente **A4** eingesetzt werden. Beispiele für die Komponente **A4** sind oberflächenaktive Substanzen, Schaumstabilisatoren, Zellregler, Füllstoffe, Farbstoffe, Pigmente, Hydrolyseschutzmittel, fungistatische und bakteriostatisch wirkende Substanzen.

Als oberflächenaktive Substanzen kommen z.B. Verbindungen in Betracht, welche zur Unterstützung der Homogenisierung der Ausgangsstoffe dienen und gegebenenfalls auch geeignet sind, die Zellstruktur der Kunststoffe zu regulieren. Genannt seien beispielsweise Emulgatoren, wie die Natriumsalze von Ricinusölsulfaten oder von Fettsäuren sowie Salze von Fettsäuren mit Aminen, z.B. ölsaures Diethylamin, stearinsaures Diethanolamin, ricinolsaures Diethanolamin, Salze von Sulfonsäuren, z.B. Alkali- oder Ammoniumsalze von Dodecylbenzol- oder Dinaphthylmethandisulfonsäure und Ricinolsäure; Schaumstabilisatoren, wie Siloxanoxalkylen-Mischpolymerisate und andere Organopolysiloxane, oxethylierte Alkylphenole, oxethylierte Fettalkohole, Paraffinöle, Rizinusöl- bzw. Ricinolsäureester, Türkischrotöl und Erdnussöl, und Zellregler, wie Paraffine, Fettalkohole und Dimethylpolysiloxane. Zur Verbesserung der Emulgierwirkung, der Zellstruktur und/oder Stabilisierung des Schaumes eignen sich ferner die oben beschriebenen oligomeren Acrylate mit Polyoxyalkylen- und Fluoralkanresten als Seitengruppen.

Als Füllstoffe, insbesondere verstärkend wirkende Füllstoffe, sind die an sich bekannten, üblichen organischen und anorganischen Füllstoffe, Verstärkungsmittel, Beschwerungsmittel, Mittel zur Verbesserung des Abriebverhaltens in Anstrichfarben, Beschichtungsmittel usw. zu nennen. Im Einzelnen seien beispielhaft genannt: anorganische Füllstoffe wie silikatische Mineralien, beispielsweise Schichtsilikate wie z. B. Antigorit, Serpentin, Sepiolit, Hornblenden, Amphibole, Chrisotil, Montmorillonit und Talkum, Metalloxide, wie Kaolin, Aluminiumoxide, Titanoxide und Eisenoxide, Metallsalze, wie Kreide, Huntit, Schwerspat und anorganische Pigmente, wie Magnetit, Goethit, Cadmiumsulfid und Zinksulfid, sowie Glas u.a. sowie natürliche und synthetische faserförmige Mineralien wie Wollastonit, Metall- und insbesondere Glasfasern verschiedener Länge, die gegebenenfalls geschlichtet sein können. Als organische Füllstoffe kommen beispielsweise in Betracht: Kohle, Melamin, Kolophonium, Cyclopentadienylharze und Pfropfpolymerisate sowie Cellulosefasern, Polyamid-, Polyacrylnitril-, Polyurethan-, Polyesterfasern auf der Grundlage von aromatischen und/oder aliphatischen Dicarbonsäureestern und Kohlenstofffasern.

Zur Herstellung der PUR-/PIR-Schaumstoffe wird ein Flammschutzmittel **A5** eingesetzt, wobei das Flammschutzmittel **A5** erfindungsgemäß eine Komponente **A5.1** enthält. Die Komponente **A5.1** enthält mindestens eine Verbindung ausgewählt aus der Gruppe bestehend aus Dibutylhydroxymethylphosphonat, dem Dimer von Dibutylhydroxymethylphosphonat, Butylethylhydroxymethylphosphonat mit einem molaren Verhältnis von Ethyl/Butyl von höchstens 15/85, acetyliertes Dibutylhydroxymethylphosphonat, dem Dimer des acetylierten Dibutylhydroxymethylphosphonat, acetyliertes Diethylhydroxymethylphosphonat und dem Dimer des acetylierten Diethylhydroxymethylphosphonat.

Die Herstellung der Verbindungen der Komponente A5.1 ist an sich bekannt und zum Beispiel in WO 2010/080425 beschrieben. Die Herstellung erfolgt in der Regel in Anwesenheit eines Katalysators und kann lösungsmittelfrei oder in Anwesenheit eines Lösungsmittels erfolgen.

Die Herstellung der Verbindungen der Komponente **A5.1** erfolgt bevorzugt mittels eines Katalysators ausgewählt aus der Gruppe bestehend aus phosphorhaltigen Basen, wie Phosphazene oder Alkaliphosphaten, Alkalicarbonaten und Amine, wobei tertiäre Trialkylamine ausgenommen sind, besonders bevorzugt ausgewählt aus der Gruppe bestehend aus phosphorhaltigen Basen und Alkalicarbonaten.. Insbesondere bevorzugt wird eine phosphorhaltige Base als Katalysator eingesetzt. Für die Alkaliphosphate und Alkalicarbonate werden bevorzugt Natrium oder Kalium als Alkalimetall eingesetzt.

Es ist zudem bevorzugt, dass die Komponente **A5.1** ohne Lösungsmittel oder in einem phosphorhaltigen Lösungsmittel (z.B. Hydroxymethylphosphonat) hergestellt wird.

Falls das Dimer von Dibutylhydroxymethylphosphonat bzw. das Dimer des acetylierten Dibutylhydroxymethylphosphonat in der Komponente **A5.1** enthalten ist, ist das Dimer von Dibutylhydroxymethylphosphonat bevorzugt in einem Anteil von 0,1 bis 30,0 Gew.-%, besonders bevorzugt 1,0 bis 25,0 Gew.-%, ganz besonders bevorzugt 4,0 bis 15,0 Gew.-% und/oder das Dimer des acetylierten Dibutylhydroxymethylphosphonat bevorzugt in einem Anteil von 0,1 bis 30,0 Gew.-%, besonders bevorzugt 1,0 bis 25,0 Gew.-% und ganz besonders bevorzugt 4,0 bis 15,0 Gew.-%, jeweils bezogen auf das Gesamtgewicht des jeweiligen eingesetzten Monomers, enthalten.

Zusätzlich zur Komponente **A5.1** kann das Flammschutzmittel **A5** weitere Flammschutzmittel wie beispielsweise Phosphate, wie z. B. Triethylphosphat (TEP), Triphenylphosphat (TPP), Trikresylphosphat, Diphenylkresylphosphat (DPK), tert-Butylphenyldiphenylphosphat, Resorcinyldiphenylphosphat (auch als Oligomer) und Bisphenol-A-bis(diphenylphosphat) (auch als Oligomer). Phosphonate wie Diethylethylphosphonat (DEEP), Dimethylpropylphosphonat (DMPP), Diethanolaminomethylphosphonsäurediethylester, Veriquel® R100 bzw. "E06-16" von der Fa. ICL, und auch gemischte Phosphonate wie Ethylbutylhydroxymethylphosphonat sowie Phosphinate wie 9,10-Dihydro-9-oxa-10-phosphorylphenanthrene-10-oxid (DOPO), Salze der Diphenylphosphinigen Säure und Salze der Diethylphosphinigen Säure Et$_2$PO2H (Exolit® OP 1235, Exolit® OP 935, Exolit® OP 935, Exolit® OP L 1030) eingesetzt werden. Weitere geeignete Flammschutzmittel A5 sind beispielsweise bromierte Ester, bromierte Ether (Ixol) oder bromierte Alkohole wie Dibromneopentylakohol, Tribromneopentylalkohol, Tetrabromphthalat Diol, sowie chlorierte Phosphate wie Tris(2-chlorethyl)phosphat, Tris-(2-chlorpropyl)phosphat (TCPP), Tris(1,3-dichlorpropyl)phosphat, Tris-(2,3-dibrompropyl)phosphat, Tetrakis-(2-chlorethyl)-ethylendiphosphat, sowie handelsübliche halogenhaltige Flammschutzpolyole. Bevorzugt sind Diphenylkresylphosphat, Triethylphosphat und Bisphenol-A-bis(Diphenylphosphat). Es ist besonders bevorzugt, dass kein halogenhaltiges Flammschutzmittel eingesetzt wird.

Der Anteil der Komponente **A5.1** am Flammschutzmittel **A5** beträgt vorzugsweise 30,0 Gew.-% bis 100,0 Gew.-

%, bevorzugt 50,0 bis 100,0 Gew.-%, insbesondere 80,0 bis 100,0 Gew.-%, jeweils bezogen auf die Gesamtmasse des Flammschutzmittels **A5**.

Der Anteil an Komponente **A5.1** im Reaktionsgemisch beträgt vorzugsweise 0,1 Gew.-% bis 30,0 Gew.-%, bevorzugt 5,0 Gew.-% bis 25,0 Gew.-%, insbesondere 10,0 bis 25,0 Gew.-%, jeweils bezogen auf die Gesamtmasse der Komponente **A1** = 100 Gew.-%.

Als geeignete Isocyanatkomponente **B** kommen z. B. Polyisocyanate, d. h. Isocyanate mit einer NCO-Funktionalität von mindestens 2, in Frage. Beispiele solcher geeigneten Polyisocyanate sind 1,4-Butylendiisocyanat, 1,5-Pentandiisocyanat, 1,6-Hexamethylendiisocyanat (HDI), Isophorondiisocyanat (IPDI), 2,2,4- und/oder 2,4,4-Trimethylhexamethylendiisocyanat, die isomeren Bis(4,4'- isocyanatocyclohexyl)methane oder deren Mischungen beliebigen Isomerengehalts, 1,4-Cyclohexylendiisocyanat, 1,4-Phenylendiisocyanat, 2,4- und/oder 2,6-Toluylendiisocyanat (TDI), 1,5-Naphthylendiisocyanat, 2,2'- und/oder 2,4'- und/oder 4,4'-Diphenylmethandiisocyanat (MDI) und/oder höhere Homologe (polymeres MDI), 1,3- und/oder 1,4-Bis-(2-isocyanato-prop-2-yl)-benzol (TMXDI), 1,3-Bis-(isocyanatomethyl)benzol (XDI), sowie Alkyl-2,6-diisocyanatohexanoate (Lysindiisocyanate) mit C1- bis C6-Alkylgruppen. Bevorzugt wird die Isocyanatkomponente **B** ausgewählt aus mindestens einer Verbindung aus der Gruppe bestehend aus MDI, polymeres MDI und TDI.

Neben den vorstehend genannten Polyisocyanaten können anteilig auch modifizierte Diisocyanate mit Uretdion-, Isocyanurat-, Urethan-, Carbodiimid-, Uretonimin-, Allophanat-, Biuret-, Amid-, Iminooxadiazindion- und/oder Oxadiazintrionstruktur sowie nicht-modifiziertes Polyisocyanat mit mehr als 2 NCO-Gruppen pro Molekül wie zum Beispiel 4-Isocyanatomethyl-1,8-octandiisocyanat (Nonantriisocyanat) oder Triphenylmethan-4,4',4"-triisocyanat, mit eingesetzt werden.

Statt oder zusätzlich zu den oben genannten Polyisocyanaten können auch geeignete NCO-Präpolymere als Isocyanatkomponente **B** eingesetzt werden. Die Präpolymere sind herstellbar durch Umsetzung eines oder mehrerer Polyisocyanate mit einem oder mehreren Polyolen, entsprechend den unter den Isocyanat-reaktiven Komponenten **A1** beschriebenen Polyolen.

Unter der Isocyanat-Kennzahl (auch Kennzahl oder Isocyanat-Index genannt) wird der Quotient aus der tatsächlich eingesetzten Stoffmenge [Mol] an Isocyanat-Gruppen und der tatsächlich eingesetzten Stoffmenge [Mol] an Isocyanat-reaktiven Gruppen, multipliziert mit 100, verstanden:

$$\text{Kennzahl} = (\text{Mole Isocyanat-Gruppen} / \text{Mole Isocyanat-reaktive Gruppen}) * 100$$

Erfindungsgemäß beträgt die Kennzahl (Index) im Reaktionsgemisch 80 bis 600, vorzugsweise 100 bis 500, bevorzugt 200 bis 400. Diese Kennzahl liegt besonders bevorzugt in einem Bereich von 240 bis 400 in dem ein hoher Anteil an Polyisocyanuraten (PIR) vorliegt (der Schaumstoff wird als PIR-Schaumstoff oder PUR-/PIR-Schaumstoff bezeichnet) und zu einer höheren Flammwidrigkeit des PUR-/PIR-Schaumstoffs selbst führt. Ein anderer besonders bevorzugter Bereich für die Isocyanat-Kennzahl ist der Wertebereich von 90 bis 150, insbesondere von 110 bis 150 (der Schaumstoff wird als Polyurethanschaumstoff (PUR-Schaumstoff) bezeichnet) in dem der PUR-/PIR-Schaumstoff zum Beispiel zu geringerer Sprödigkeit neigt.

Der NCO-Wert (auch: NCO-Gehalt, Isocyanatgehalt) wird bestimmt mittels EN ISO 11909 (Mai 2007). Falls nicht anders angegeben, handelt es sich um die Werte bei 25°C.

Die Erfindung betrifft ebenfalls einen PUR-/PIR-Schaumstoff der durch das erfindungsgemäße Verfahren hergestellt ist.

Die Herstellung der erfindungsgemäßen PUR-/PIR-Schaumstoffe erfolgt nach dem Fachmann bekannten Einstufenverfahren, bei dem die Reaktionskomponenten kontinuierlich oder diskontinuierlich miteinander zur Reaktion gebracht werden und dann anschließend entweder manuell oder durch Zuhilfenahme maschineller Einrichtungen im Hochdruck- oder Niederdruckverfahren nach Austrag auf ein Transportband oder in geeignete Formen zur Aushärtung gebracht werden. Beispiele sind in US-A 2 764 565, in G.Oertel (Hrsg.) "Kunststoff-Handbuch", Band VII, Carl Hanser Verlag, 3. Auflage, München 1993, S. 267 ff., sowie in K. Uhlig (Hrsg.) "Polyurethan Taschenbuch", Carl Hanser Verlag, 2. Auflage, Wien 2001, S. 83-102 beschrieben.

Die erfindungsgemäßen PUR-/PIR-Schaumstoffe finden bevorzugt zur Herstellung von Verbundelementen Verwendung. Üblicherweise findet hier die Verschäumung in kontinuierlicher oder diskontinuierlicher Weise gegen mindestens eine Deckschicht statt.

Ein weiterer Gegenstand der Erfindung ist demzufolge die Verwendung eines erfindungsgemäßen PUR-/PIR-Schaumstoffes als Isolationsschaumstoff und/oder als Haftvermittler in Verbundelementen, wobei die Verbundelemente eine einen erfindungsgemäßen PUR-/PIR-Schaumstoff umfassende Schicht und mindestens eine Deckschicht umfassen. Die Deckschicht wird hierbei zumindest teilweise von einer den erfindungsgemäßen PUR-/PIR-Schaumstoff umfassenden Schicht kontaktiert. Verbundelemente der hier interessierenden Art werden auch als Sandwich-Elemente oder Dämmplatten bezeichnet und dienen in der Regel als Bauelemente für den Schallschutz, die Dämmung, zum Hallenbau oder für den Fassadenbau. Die Deckschichten können dabei z.B. Metallbahnen, Kunststoffbahnen oder bis zu 7 mm starke Spanplatten bilden, abhängig vom Einsatzzweck der Verbundelemente. Bei den einen oder zwei Deckschichten kann es sich jeweils um eine flexible Deckschicht, z.B. um eine Aluminium-Folie, Papier, Multischicht-Deckschichten aus Papier und Aluminium oder aus Mineralvließ, und/oder um eine starre Deckschicht, z.B. aus Stahlblech oder Spanplatten, handeln.

In einer ersten Ausführungsform betrifft die Erfindung ein Verfahren zur Herstellung von PUR-/PIR-Schaumstoffen durch die Umsetzung eines Reaktionsgemisches enthaltend

**A1**    eine Isocyanat-reaktive Komponente

**A2**    Treibmittel

**A3**    Katalysator

**A4**    gegebenenfalls Additiv

**A5**    Flammschutzmittel

mit

**B**    einer Isocyanatkomponente,

wobei die Herstellung bei einer Kennzahl von 80 bis 600 erfolgt,
dadurch gekennzeichnet, dass das Flammschutzmittel **A5** eine Komponente **A5.1** enthält, wobei die Komponente **A5.1** mindestens eine Verbindung ausgewählt aus der Gruppe bestehend aus Dibutylhydroxymethylphosphonat, dem Dimer von Dibutylhydroxymethylphosphonat, Butylethylhydroxymethylphosphonat mit einem molaren Verhältnis von Ethyl/Butyl von höchstens 15/85, acetyliertes Dibutylhydroxymethylphosphonat, dem Dimer des acetylierten Dibutylhydroxymethylphosphonat, acetyliertes Diethylhydroxymethylphosphonat und dem Dimer des acetylierten Diethylhydroxymethylphosphonat enthält.

In einer zweiten Ausführungsform betrifft die Erfindung ein Verfahren gemäß der ersten Ausführungsform, dadurch gekennzeichnet, dass in der Isocyanat-reaktiven Komponente **A1** ein Polyesterpolyol enthalten ist.

In einer dritten Ausführungsform betrifft die Erfindung ein Verfahren gemäß der zweiten Ausführungsform, dadurch gekennzeichnet, dass das Polyesterpolyol eine OH-Zahl im Bereich von 100 bis 400 mg KOH/g aufweist.

In einer vierten Ausführungsform betrifft die Erfindung ein Verfahren gemäß einer der Ausführungsformen 1 bis 3, dadurch gekennzeichnet, dass das Treibmittel **A2** ausgewählt ist aus einer oder mehreren Verbindungen der Gruppe bestehend aus halogenfreien chemischen Treibmitteln, halogenfreien physikalischen Treibmitteln und (hydro)fluorierten Olefinen.

In einer fünften Ausführungsform betrifft die Erfindung ein Verfahren gemäß einer der Ausführungsformen 1 bis 4, dadurch gekennzeichnet, dass das Flammschutzmittel **A5** 30,0 Gew.-% bis 100,0 Gew.-%, bezogen auf die Gesamtmasse des Flammschutzmittels **A5,** der Komponente **A5.1** enthält.

In einer sechsten Ausführungsform betrifft die Erfindung ein Verfahren gemäß einer der Ausführungsformen 1 bis 5, dadurch gekennzeichnet, dass der Anteil an Komponente **A5.1** 0,1 Gew.-% bis 30,0 Gew.-%, bezogen auf die Gesamtmasse der Komponente **A1** = 100 Gew.-% und bevorzugt 0,04-0,4 mol Phosphonat pro kg Schaumstoff beträgt.

In einer siebten Ausführungsform betrifft die Erfindung ein Verfahren gemäß einer der Ausführungsformen 1 bis 6, dadurch gekennzeichnet, dass das Flammschutzmittel **A5** kein halogenhaltiges Flammschutzmittel enthält.

In einer achten Ausführungsform betrifft die Erfindung ein Verfahren gemäß einer der Ausführungsformen 1 bis 7, dadurch gekennzeichnet, dass die Komponente **A5.1** mittels eines Katalysators, ausgewählt aus mindestens einer Verbindung der Gruppe bestehend aus phosphorhaltigen Basen, Alkalicarbonaten und Aminen, wobei tertiäre Trialkylaminen ausgenommen sind, hergestellt wurde.

In einer neunten Ausführungsform betrifft die Erfindung ein Verfahren gemäß einer der Ausführungsformen 1 bis 7, dadurch gekennzeichnet, dass die Komponente **A5.1** mittels einer phosphorhaltigen Base als Katalysator hergestellt wurde.

In einer zehnten Ausführungsform betrifft die Erfindung ein Verfahren gemäß einer der Ausführungsformen 1 bis 7, dadurch gekennzeichnet, dass die Komponente **A5.1** in Abwesenheit tertiärer Amine und ohne phosphorfreie Lösungsmittel hergestellt wurde.

In einer elften Ausführungsform betrifft die Erfindung ein Verfahren gemäß einer der Ausführungsformen 1 bis 10, dadurch gekennzeichnet, dass die die Komponente **A5.1** ausgewählt ist aus mindestens einer Verbindung aus der Gruppe bestehend aus Dibutylhydroxymethylphosphonat, dem Dimer von Dibutylhydroxymethylphosphonat, Butylethylhydroxymethylphosphonat mit einem molaren Verhältnis von Ethyl/Butyl von höchstens 15/85, acetyliertes Dibutylhydroxymethylphosphonat, dem Dimer des acetylierten Dibutylhydroxymethylphosphonat.

In einer zwölften Ausführungsform betrifft die Erfindung ein Verfahren nach einer der Ausführungsformen 1 bis 11, dadurch gekennzeichnet, dass die Komponente A5.1 ausgewählt ist aus einem Gemisch von Dibutylhydroxymethylphosphonat und 0,1 bis 30 Gew.-%, bezogen auf das Gesamtgewicht des eingesetzten Dibutylhydroxymethylphosphonat, des Dimers von Dibutylhydroxymethylphosphonat und/oder ein Gemisch von acetyliertem Dibutylhydroxymethylphosphonat und 0,1 bis 30,0 Gew.-%, bezogen auf das Gesamtgewicht des eingesetzten acetylierten Dibutylhydroxymethylphosphonats, des Dimers von acetyliertem Dibutylhydroxymethylphosphonat.

In einer dreizehnten Ausführungsform betrifft die Erfindung ein Verfahren nach der ersten Ausführungsform, dadurch gekennzeichnet, dass ein Reaktionsgemisch enthaltend

**A1** ein Polyesterpolyol mit einer Hydroxylzahl von 50 mg KOH/g bis 400 mg KOH/g,

**A2** Treibmittel, enthaltend eine Verbindung ausgewählt aus der Gruppe bestehend aus halogenfreien chemischen Treibmitteln, halogenfreien physikalischen Treibmitteln und (hydro)fluorierten Olefinen,

**A3** Katalysator, enthaltend Alkalicarboxylat und/oder Di- oder Trialkylaminomethylphenol,

**A4** Additiv, enthaltend einen Schaumstabilisator,

**A5** Flammschutzmittel, enthaltend Dibutylhydroxymethylphosphonat und gegebenenfalls dessen Dimer,

mit

**B** monomeres und polymeres MDI

umgesetzt wird.

In einer vierzehnten Ausführungsform betrifft die Erfindung einen PUR-/PIR-Schaumstoff, erhältlich nach dem Verfahren gemäß einer der Ausführungsformen 1 bis 13.

In einer fünfzehnten Ausführungsform betrifft die Erfindung die Verwendung von PUR-/PIR-Schaumstoffen nach der vierzehnten Ausführungsform zur Herstellung eines Isolationsmaterials.

In einer sechszehnten Ausführungsform betrifft die Erfindung ein Verfahren nach der ersten Ausführungsform, dadurch gekennzeichnet, dass das Reaktionsgemisch enthaltend

**A1** 50 Gew.-% bis 100 Gew.-% eines oder mehrerer Polyesterpolyole und 0 Gew.-% bis 20 Gew.-% eines oder mehrerer Polyetherpolyole, jeweils bezogen auf das Gesamtgewicht der Komponente **A1**,

**A2** Wasser und physikalische Treibmittel,

**A3** Katalysator,

**A4** gegebenenfalls Additiv,

**A5** Flammschutzmittel, enthaltend Dibutylhydroxymethylphosphonat und gegebenenfalls dessen Dimer und/oder acetyliertes Dibutylhydroxymethylphosphonat und gegebenenfalls dessen Dimer,

mit

**B** polymeres Isocyanat

umgesetzt wird.

In einer siebzehnten Ausführungsform betrifft die Erfindung ein Verfahren nach einer der Ausführungsformen 1 bis 13, dadurch gekennzeichnet, dass die Herstellung bei einer Kennzahl von 110 bis 150 erfolgt.

In einer achtzehnten Ausführungsform betrifft die Erfindung ein Verfahren nach einer der Ausführungsformen 1 bis 13, dadurch gekennzeichnet, dass die Herstellung bei einer Kennzahl von 240 bis 390 erfolgt.

In einer neunzehnten Ausführungsform betrifft die Erfindung ein Verfahren nach einer der Ausführungsformen 1 bis 13, dadurch gekennzeichnet, dass der Anteil an Phosphonat 0,04-0,4 mol pro kg Schaumstoff beträgt.

**Beispiele**

Die OH-Zahl (Hydroxylzahl) wurde gemäß DIN 53240-1 (Juni 2013) bestimmt. Die Bestimmung der Säurezahl wurde gemäß DIN EN ISO 2114 (November 2006) durchgeführt. Die Bestimmung der Viskosität erfolgte auf einem Physica MCR 501 Rheometer der Fa. Anton Paar. Es wurde eine Kegel-Platte-Konfiguration mit einem Abstand von 1 mm gewählt (Messsystem DCP25). Das Polyol (0,1 g) wurde auf der Rheometerplatte aufgebracht und bei 25 °C einer Scherung von 0,01 bis 1000 1/s unterworfen und für 10 min alle 10 s die Viskosität gemessen. Angegeben ist die über alle Messpunkte gemittelte Viskosität.

Diethylhydroxymethylphosphonat (DEHMP) und Dibutylhydroxymethylphosphonat (DBHMP) werden mittels Protonen-entkoppelter $^{31}$P-NMR-Spektroskopie anhand ihrer Signale bei 23,8 und 23,7 ppm identifiziert ($H_3PO_4$ =0,0 ppm). Die Dimere sind durch je zwei Dubletts ($J_{P-P}$ = 59 Hz) bei 17,8 und 25,2 ppm für DEHMP und 18,2 und 25.3 ppm für DBHMP identifiziert. Die O-acetylierten Derivate lassen sich durch ihre $^{31}$P-Signale bei 17,85 ppm (acetyliertes DEHMP) bzw. 18,0 ppm (acetyliertes DBHMP) und Dubletts bei 16,7 bzw. 19,7 ppm (Dimere des acetylierten DEHMP) bzw. Dubletts bei 16,9 bzw. 19,8 ppm (Dimere des acetylierten DBHMP) identifizieren. Im Folgenden wird ein Indikator D/M angegeben, der die $^{31}$P-NMR-Integrale des mit dem Dimeren assoziierten Dubletts im Bereich von 16,5-18,5 ppm zum Monomer angibt. Die Umrechnung des Indikators D/M zu einem Gewichtsverhältnis von Monomer zu Dimer erfolgt unter den Annahmen gleicher Relaxationszeit aller Phosphoratome im $^{31}$P-NMR und Vernachlässigung ggf. überlagerter Spurenverunreinigungen

Einsatzstoffe:

A1-1    86 Gew.-% eines aliphatischen Polyesterpolyols mit OH-Zahl 214 mg KOH/g und einer Viskosität von 2000 mPas bei 25°C, hergestellt durch Umsetzung eines Gemischs von Adipinsäure, Bernsteinsäure und Glutarsäure mit Ethylenglykol, 14 Gew.-% eines aliphatischen Polyetherpolyols mit OH-Zahl 28, 90 Mol-% primären OH-Gruppen und einer Viskosität von 860 mPas bei 25°C (Desmophen® L 2830, Covestro Deutschland AG)

A1-2    93 Gew.-% eines Polyesterpolyols auf Basis von Terephthalsäure, Adipinsäure und Diethylenglykol mit OH-Zahl 195 mg KOH/g,
7 Gew.-% eines Polyetherpolyols mit einem zentralen Block aus Propylenoxid und zwei endständigen Blöcken aus Ethylenoxid

A1-3    100 Gew.-% eines aromatischen Polyesterpolyols mit OH-Zahl 240 mg KOH/g (Stepanpol® PS-2352, Fa. Stepan Company)

A2-1    n-Pentan

A2-2    Wasser

A2-3    Gemisch aus cyclo-Pentan und iso-Pentan in einem Gewichtsverhältnis von 30/70

A3-1    Dimethylcyclohexylamin

A3-2    25 Gew.-% Kaliumacetat in Diethylenglykol

A4-1    Polyether-modifiziertes Silicon (Tegostab® B8421, Fa. Evonik)

A5-1    Tris(2-chlorisopropyl)phosphat (Levagard® PP, Fa. Lanxess)

A5-2    Diphenylkresylphosphat (Disflamoll® DPK, Fa. Lanxess)

A5-3    cyclisches Phosphonat mit einem Anteil von 19 Gew.-% Phosphor (Aflammit® PLF 710, Fa. Thor GmbH)

B-1    polymeres MDI mit einer Viskosität von 700 mPas bei 25°C und einem NCO-Gehalt von 31,5 Gew.-% (Desmodur® 44V70L, Covestro Deutschland AG)

**A5-4: Herstellung von Diethylhydroxymethylphosphonat (DEHMP)**

138,1 g Diethylphosphit (1 mol), 36,04 g Paraformaldehyd (1,2 mol), 0,2 dm³ Isobutanol, 0,15 dm³ Cyclopentan und 6,9 g Kaliumcarbonat (50 mmol, 5 mol-%) werden bei 35°C gemischt und unter Rühren in einem 1-dm³ Vierhalskolben mit Rückflusskühler, Stickstoffüberlagerung und Thermometer für eine Stunde zum Rückfluss erhitzt. Nach dem Abkühlen und Filtrieren werden aus der Mischung am Rotationsverdampfer bei 60°C bis zu einem Endvakuum von 10 mbar die Lösungsmittel abgezogen. Es bleibt eine Ausbeute von 178,25 Gramm einer klaren Flüssigkeit. Die OH-Zahl beträgt 300 mg KOH/g, die Säurezahl 5,83 mg KOH/g.
D/M = 0,011
Berechnetes Gewichtsverhältnis von Monomer zu Dimer = 98:2

**A5-5: Herstellung von Diethylhydroxymethylphosphonat (DEHMP)**

138,1 g Diethylphosphit (1 mol), 0,35 dm³ 1-Butanol und 36,04 g Paraformaldehyd (1,2 mol) unter Rühren in einem 0,5-dm³ Vierhalskolben mit Rückflusskühler, Stickstoffüberlagerung und Thermometer auf 35°C aufgeheizt. 6,9 Gramm trockenes Kaliumcarbonat werden portionsweise zugegeben. Die Temperatur wird mit Hilfe eines Wasserbades bei ≤ 60°C gehalten. Die Reaktionsmischung wird nach Zugabe insgesamt 1 Stunde bei 60°C gerührt. Nach dem Abkühlen und Filtrieren wird die Lösung und aus der Mischung am Rotationsverdampfer von auf 60°C ansteigend über vier Stunden bis zu einem Endvakuum von 10 mbar destilliert. Man erhält eine Ausbeute von 180 Gramm. D/M = 0,009
Berechnetes Gewichtsverhältnis von Monomer zu Dimer = 98:2

**A5.1-1: Herstellung von Dibutylhydroxymethylphosphonat (DBHMP) mit Kaliumphosphat als Katalysator**

97,4 g Dibutylphosphit (0,5 mol), 25,03 g Tributylphosphit (0,1 mol) und 3,4 g Kaliumphosphat $K_3PO_4$ (16 mmol, 1,6 mol-%) werden gemischt und unter Rühren in einem 0,5-dm³ Vierhalskolben mit Rückflusskühler, Stickstoffüberlagerung und Thermometer auf 65°C aufgeheizt. Parallel werden in einer PE-Spritzflasche mit einem Magnetrührer bei 20°C 31,5 g Paraformaldehyd (1,05 mol) in 58,2 g Dibutylphosphit (0,3 mol) aufgerührt. Die Suspension wird in sechs Portionen in den Vierhalskolben dosiert. Die Temperatur wird mit Hilfe eines Wasserbades bei ≤ 75°C gehalten. Nach der sechsten Portion werden 19,4 g Dibutylphosphit (0,1 mol) in die Spritzflasche gefüllt und das restliche an den Wandungen anhaftende Paraformaldehyd wird in den Vierhalskolben gespült. Die Reaktionsmischung wird nach Zugabe insgesamt 4 Stunden bei 75°C gerührt. Nach dem Abkühlen und wird die Lösung und aus der Mischung am Rotationsverdampfer von 60°C auf 75°C ansteigend über vier Stunden bis zu einem Endvakuum von 10 mbar 9,0 Gramm Destillat abgezogen. Es bleibt eine Ausbeute von 212,9 Gramm einer klaren Flüssigkeit. Die OH-Zahl beträgt 212 mg KOH/g, die Säurezahl 0,5 mg KOH/g.
D/M = 0,11
Berechnetes Gewichtsverhältnis von Monomer zu Dimer = 84:16

**A5.1-2: Herstellung von Butylethylhydroxymethylphosphonat mit Kaliumphosphat als Katalysator**

97,4 g Dibutylphosphit (0,5 mol), 16,62 g Triethylphosphit (0,1 mol) und 1,36 g Kaliumphosphat $K_3PO_4$ (6,4 mmol, 0,64 mol-%) werden gemischt und unter Rühren in einem 0,5-dm³ Vierhalskolben mit Rückflusskühler, Stickstoffüberlagerung und Thermometer auf 70°C aufgeheizt. Parallel werden in einer PE-Spritzflasche mit einem Magnetrührer bei 20°C 31,5 g Paraformaldehyd (1,05 mol) in 58,2 g Dibutylphosphit (0,3 mol) aufgerührt. Die Suspension wird in sechs Portionen in den Vierhalskolben dosiert. Die Temperatur wird mit Hilfe eines Wasserbades bei ≤ 75°C gehalten. Nach der sechsten Portion werden 19,4 g Dibutylphosphit (0,1 mol) in die Spritzflasche gefüllt und das restliche an den Wandungen anhaftende Paraformaldehyd wird in den Vierhalskolben gespült. Die Reaktionsmischung wird nach Zugabe insgesamt 4 Stunden bei 75°C gerührt. Nach dem Abkühlen und wird die Lösung und aus der Mischung am Rotationsverdampfer von 60°C auf 75°C ansteigend über vier Stunden bis zu einem Endvakuum von 10 mbar Destillat (0,9 Gramm) abgezogen. Es bleibt nach Filtrieren über einen Papierfaltenfilter ein Filterrückstand von 7,6 Gramm und eine Ausbeute von 204 Gramm einer klaren Flüssigkeit. Die OH-Zahl beträgt 210 mg KOH/g, die Säurezahl 1,45 mg KOH/g.
D/M = 0,06
Berechnetes Gewichtsverhältnis von Monomer zu Dimer = 91:9

**A5.1-3: Herstellung von Dibutylhydroxymethylphosphonat (DBHMP) mit Kaliumphosphat als Katalysator**

97,4 g Dibutylphosphit (0,5 mol), 25,03 g Tributylphosphit (0,1 mol) und 1,36 g Kaliumphosphat $K_3PO_4$ (6,4 mmol, 0,64 mol-%) werden gemischt und unter Rühren in einem 0,5-dm³ Vierhalskolben mit Rückflusskühler, Stickstoffüberlagerung und Thermometer auf 70°C aufgeheizt. Parallel werden in einer PE-Spritzflasche mit einem Magnetrührer bei 20°C 31,5 g Paraformaldehyd (1,05 mol) in 58,2 g Dibutylphosphit (0,3 mol) aufgerührt. Die Suspension wird in sechs Portionen in den Vierhalskolben dosiert. Die Temperatur wird mit Hilfe eines Wasserbades bei ≤ 75°C gehalten. Nach der sechsten Portion werden 19,4 g Dibutylphosphit (0,1 mol) in die Spritzflasche gefüllt und das restliche an den Wandungen anhaftende Paraformaldehyd wird in den Vierhalskolben gespült. Die Reaktionsmischung wird nach Zugabe insgesamt 4 Stunden bei 75°C gerührt. Nach dem Abkühlen und wird die Lösung und aus der Mischung am Rotationsverdampfer von 60°C auf 75°C ansteigend über vier Stunden bis zu einem Endvakuum von 10 mbar Destillat (5,75 Gramm) abgezogen. Es bleibt nach Filtrieren über einen Papierfaltenfilter ein Filterrückstand von 8,4 Gramm und eine Ausbeute von 207 Gramm einer klaren Flüssigkeit. Die OH-Zahl beträgt 213 mg KOH/g, die Säurezahl 0,48 mg KOH/g. D/M = 0,07

Berechnetes Gewichtsverhältnis von Monomer zu Dimer = 90:10

**A5.1-4: Herstellung von Dibutylhydroxymethylphosphonat mit Phosphazen als Katalysator**

97,4 g Dibutylphosphit (0,5 mol), 25,03 g Tributylphosphit (0,1 mol) und 0,1 g Phosphazenbase BTPP (0,32 mmol, 0,032 mol-%) werden gemischt und unter Rühren in einem 0,5-dm³ Vierhalskolben mit Rückflusskühler, Stickstoffüberlagerung und Thermometer auf 70°C aufgeheizt. Parallel werden in einer PE-Spritzflasche mit einem Magnetrührer bei 20°C 31,5 g Paraformaldehyd (1,05 mol) in 58,2 g Dibutylphosphit (0,3 mol) aufgerührt. Die Suspension wird in sechs Portionen in den Vierhalskolben dosiert. Die Temperatur wird mit Hilfe eines Wasserbades bei ≤ 75°C gehalten. Nach der sechsten Portion werden 19,4 g Dibutylphosphit (0,1 mol) in die Spritzflasche gefüllt und das restliche an den Wandungen anhaftende Paraformaldehyd wird in den Vierhalskolben gespült. Die Reaktionsmischung wird nach Zugabe insgesamt 4 Stunden bei 75°C gerührt. Dann ist die Reaktionsmischung ganz klar. Nach dem Abkühlen werden aus der Mischung am Rotationsverdampfer von 60°C auf 90°C ansteigend über drei Stunden bis zu einem Endvakuum von 10 mbar 8,7 Gramm Destillat abgezogen. Es bleibt eine Ausbeute von 216,2 Gramm einer klaren Flüssigkeit. Die OH-Zahl beträgt 203 mg KOH/g, die Säurezahl 1,3 mg KOH/g. D/M = 0,039

Berechnetes Gewichtsverhältnis von Monomer zu Dimer = 94:6

**A5.1-5: Herstellung von Dibutylhydroxymethylphosphonat mit Diisopropylethylamin als Katalysator**

33,33 mL des Ansatzes von A5-4, 31,5 g Paraformaldehyd (1,05 mol) und 3,05 g Diisopropyethylamin (23,6 mmol, 2,36 mol-%) werden gemischt und unter Rühren in einem 0,5-dm³ Vierhalskolben mit Rückflusskühler, Stickstoffüberlagerung und Thermometer auf 50°C aufgeheizt. Eine Mischung aus 175 g Dibutylphosphit (0,9 mol) und 25,03 g Tributylphosphit (0,1 mol) wird portionsweise in den Vierhalskolben dosiert. Die Temperatur wird mit Hilfe eines Wasserbades bei ≤ 50°C gehalten. Nach Zugabe wird die Mischung zwei Stunden bei 75°C gerührt. Dann ist die Reaktionsmischung ganz klar. Aus der Rohware werden am Rotationsverdampfer von 45°C auf 75°C ansteigend über drei Stunden bis zu einem Endvakuum von 10 mbar 14,13 Gramm Destillat abgezogen. Es bleibt eine Ausbeute von 245,87 Gramm einer klaren Flüssigkeit. Die OH-Zahl beträgt 204 mg KOH/g, die Säurezahl 2,9 mg KOH/g. D/M = 0,054

Berechnetes Gewichtsverhältnis von Monomer zu Dimer = 92:8 entsprechen

**A5.1-6: Herstellung von acetyliertem Diethylhydroxymethylphosphonat**

In einem 0,1-dm³ Rundkolben werden 45 g A5-5 mit 25 g Acetanhydrid verrührt. Die Reaktion ist zunächst leicht exotherm, Nach Stehen über Nacht bei Raumtemperatur wird die Mischung am Rotationsverdampfer von auf 100°C ansteigend über vier Stunden bis zu einem Endvakuum von 10 mbar destilliert. Man erhält eine Ausbeute von 57 Gramm. D/M = 0,016

Berechnetes Gewichtsverhältnis von Monomer zu Dimer = 98:2.

**Herstellung und Prüfung der PUR-/PIR-Schaumstoffe**

Die Flammenausbreitung der PUR-/PIR-Schaumstoffe wurde durch Kantenbeflammung mit dem Kleinbrennertest gemäß DIN 4102-1 (Mai 1998) an einer 18 cm x 9 cm x 2 cm großen Probe gemessen. Die Messung der Wärmefreisetzung erfolgte gemäß ISO 5660-1 (März 2015) mit dem "Cone Calorimeter".

Die Messung der Rohdichte wurde nach der DIN EN ISO 845 (Oktober 2009) durchgeführt.

Durch Zugversuche gemäß DIN 53430 (September 1975) wurde an Zugstäben (gefräst nach DIN 53430 5.1) die Zugfestigkeit ($\sigma_{Fmax}$), die Bruchdehnung ($\varepsilon_{Bruch}$) und ein Maß für die Zähigkeit ($\sigma_{Fmax}{}^{*}\varepsilon_{Bruch}/2$) bestimmt. Die Offenzelligkeit der PUR-/PIR-Schaumstoffe wurde mit einem Accupyk-1330-Gerät an Probenkörpern mit den Maßen 5 cm x 3 cm x 3 cm nach DIN EN ISO 4590 (August 2003) gemessen.

Auf Basis der Polyolkomponenten wurden im Labor PUR-/PIR-Schaumstoffe durch die Vermischung von 0,3 dm$^3$ eines Reaktionsgemisches in einem Pappbecher hergestellt. Dazu wurden der jeweiligen Polyolkomponente das Flammschutzmittel, der Schaumstabilisator, Katalysatoren und Wasser und Pentan als Treibmittel zugesetzt und kurz gerührt. Die erhaltene Mischung wurde mit dem Isocyanat vermischt und das Reaktionsgemisch in eine Papierform (3 x 3 x 1 dm$^3$) gegossen und darin ausreagiert. Die genauen Rezepturen der einzelnen Versuche sind in den nachfolgenden Tabellen wiedergegeben, ebenfalls die Ergebnisse der physikalischen Messungen an den erhaltenen Proben.

Die Tabelle 1a zeigt den Einsatz von Dibutylhydroxymethylphosphonat als Flammschutzmittel (Beispiel 3) im Vergleich gegenüber Flammschutzmitteln welche repräsentativ für den Stand der Technik sind. Der mit dem erfindungsgemäßen Flammschutzmittel hergestellte PUR-/PIR-Schaumstoff aus Beispiel 3 zeigt trotz geringerem Gehalt an flammschützendem Chlor und Phosphor eine geringe Flammenausbreitung und Wärmefreisetzung. Zusätzlich weist der PUR-/PIR-Schaumstoff aus Beispiel 3 gegenüber den Vergleichsbeispielen 1 und 2 verbesserte Werte im Zugversuch gemäß DIN 53430 (September 1975) und eine niedrigere Offenzelligkeit auf.

**Tabelle 1a**

| Beispiele | | 1* | 2* | 3 |
|---|---|---|---|---|
| A1-1 | Gew.-Tle. | 93 | 93 | 93 |
| A2-1 | Gew.-Tle. | 14,2 | 14,2 | 14,2 |
| A2-2 | Gew.-Tle. | 1,6 | 1,6 | 1,6 |
| A3-1 | Gew.-Tle. | 0,7 | 0,7 | 0,7 |
| A3-2 | Gew.-Tle. | 2,8 | 2,8 | 2,8 |
| A4-1 | Gew.-Tle. | 1,9 | 1,9 | 1,9 |
| A5-1 | Gew.-Tle. | 16,7 | | |
| A5-4 | Gew.-Tle. | | 16,7 | |
| A5.1-1 | Gew.-Tle. | | | 16,7 |
| B-1 | Gew.-Tle. | 216,4 | 251,1 | 240,6 |
| Kennzahl | | 300 | 300 | 300 |
| Chlorgehalt (berechnet) | Gew.%$^1$ | 1,6 | | |
| Phosphorgehalt (berechnet) | Gew.%$^1$ | 0,5 | 0,8 | 0,6 |
| Phosphonatgehalt (berechnet) | Mol/kg$^1$ | 0 | 0,26 | 0,20 |
| **Eigenschaften** | | | | |
| Startzeit | s | 15 | 12 | 12 |
| Abbindezeit | s | 100 | 70 | 70 |
| Steigzeit | s | 100 | 70 | 70 |
| Freie Rohdichte | kg/m$^3$ | 30 | 33 | 33 |
| $\sigma(F_{max})$ (Zugfestigkeit) | N/mm$^2$ | 0,14 | 0,16 | 0,34 |
| $\varepsilon$(Bruch) (Bruchdehnung) | % | 1,2 | 1,1 | 2,1 |
| $\sigma(F_{max})*\varepsilon$(Bruch)/2 (Indikator für Zähigkeit) | N/mm$^2$ | 0,85*10$^{-3}$ | 0,83*10$^{-3}$ | 3,59*10$^{-3}$ |
| Offenzelligkeit | % | 12 | 15 | 11 |
| Vertikale Flammausbreitung | cm | 13 | 10 | 11 |
| Brandklasse | | B2 | B2 | B2 |
| Maximum der gemittelten Wärmefreisetzung "MARHE" | kJ/m$^2$ | 105 | 89 | 85 |
| Maximum der Wärmefreisetzung | kJ/m$^2$ | 127 | 119 | 113 |
| Gesamte Wärmefreisetzung | MJ/m$^2$ | 10 | 11 | 11 |

(fortgesetzt)

| Eigenschaften | | | | |
|---|---|---|---|---|
| Rückstand | Gew.-% | 31 | 38 | 31 |
| * Vergleichsbeispiel<br>[1] Die Angaben Gew.-% und Mol/kg beziehen sich auf die Gesamtmasse der Komponenten A1 bis B1 = 100 Gew.-% | | | | |

Tabelle 1b zeigt, dass bei der Herstellung des erfindungsgemäßen Flammschutzmittels das eingesetzte Tributylphosphit anteilig durch das kommerziell einfacher zugängliche Triethylphosphit ausgetauscht werden kann und trotzdem ein PUR-/PIR-Schaumstoff mit gutem Flammschutz und mechanischen Eigenschaften erhalten werden kann.

**Tabelle 1b**

| Beispiel | | 4 | 5 |
|---|---|---|---|
| A1-1 | Gew.-Tle. | 100 | 100 |
| A2-1 | Gew.-Tle. | 15,3 | 15,3 |
| A2-2 | Gew.-Tle. | 1,7 | 1,7 |
| A3-1 | Gew.-Tle. | 0,8 | 0,8 |
| A3-2 | Gew.-Tle. | 3 | 3 |
| A4-1 | Gew.-Tle. | 2 | 2 |
| A5.1-2 | Gew.-Tle. | 18 | |
| A5.1-3 | Gew.-Tle. | | 18 |
| B-1 (Desmodur 44V70L) | Gew.-Tle. | 260 | 260 |
| Kennzahl | | 300 | 300 |
| Phosphorgehalt (berechnet) | Gew.-%[1] | 0,5 | 0,5 |
| Phosphonatgehalt (berechnet) | Mol/kg[1] | 0,16 | 0,16 |
| Eigenschaften | | | |
| Startzeit | s | 12 | 12 |
| Abbindezeit | s | 60 | 60 |
| Steigzeit | s | 60 | 60 |
| Freie Rohdichte | kg/m$^3$ | 35 | 35 |
| $\sigma(F_{max})$ (Zugfestigkeit) | N/mm$^2$ | 0,18 | 0,20 |
| $\varepsilon$(Bruch) (Bruchdehnung) | % | 5,8 | 7,3 |
| $\sigma(F_{max})$*$\varepsilon$(Bruch)/2 (Indikator für Zähigkeit) | N/mm$^2$ | $5{,}2*10^{-3}$ | $7{,}3*10^{-3}$ |
| Offenzelligkeit | % | 9 | 9 |
| Vertikale Flammausbreitung | cm | 11 | 11 |
| Brandklasse | | B2 | B2 |
| Maximum der gemittelten Wärmefreisetzung "MARHE" | kJ/m$^2$ | 93 | 99 |
| Maximum der Wärmefreisetzung | kJ/m$^2$ | 112 | 114 |
| Gesamte Wärmefreisetzung | MJ/m$^2$ | 14 | 14 |
| Rückstand | Gew.-% | 38 | 33 |
| [1] Die Angaben Gew.-% und Mol/kg beziehen sich auf die Gesamtmasse der Komponenten A1 bis B1 = 100 Gew.-% | | | |

**Tabelle 2**

| Beispiel | | 6 | 7 | 8 |
|---|---|---|---|---|
| A1-1 | Gew.-Tle. | 93 | 93 | 93 |
| A4-1 | Gew.-Tle. | 1,9 | 1,9 | 1,9 |
| A2-2 | Gew.-Tle. | 1,6 | 1,6 | 1,6 |
| A3-1 | Gew.-Tle. | 0,7 | 0,7 | 0,7 |
| A3-2 | Gew.-Tle. | 2,8 | 2,8 | 2,8 |
| A2-1 | Gew.-Tle. | 14,2 | 14,2 | 14,2 |
| A5.1-1 | Gew.-Tle. | 16,7 | | |
| A5.1-4 | Gew.-Tle. | | 16,7 | |
| A5.1-5 | Gew.-Tle. | | | 16,7 |
| Desmodur 44V70L | Gew.-Tle. | 242 | 241 | 241 |
| Index | | 300 | 300 | 300 |
| Phosphorgehalt | Gew.-%[1] | 0,6 | 0,6 | 0,6 |
| Phosphonatgehalt (berechnet) | Mol/kg[1] | 0,20 | 0,20 | 0,20 |
| **Eigenschaften** | | | | |
| Startzeit | s | 13 | 15 | 14 |
| Abbindezeit | s | 33 | 35 | 38 |
| Steigzeit | s | 55 | 55 | 60 |
| Startzeit/Steigzeit | % | 39 | 43 | 37 |
| Freie Rohdichte | kg/m$^3$ | 34 | 35 | 35 |
| Offenzelligkeit | % | 13 | 12 | 13 |
| Vertikale Flammausbreitung | cm | 12 | 12 | 12 |
| Brandklasse | | B2 | B2 | B2 |
| [1] Die Angaben Gew.-% und Mol/kg beziehen sich auf die Gesamtmasse der Komponenten A1 bis B1 = 100 Gew.-% | | | | |

Die Tabelle 2 zeigt den Vergleich der PUR-/PIR-Schaumstoffe von Beispiel 5 bis 7, welche erfindungsgemäß eine Komponente **A5.1** als Flammschutzmittel enthalten. Die Komponenten **A5.1** in Tabelle 2 wurden mit einer phosphorhaltigen Base (Beispiel 5 und 6) oder einem Amin (Beispiel 7) als Katalysator hergestellt. Die PUR-/PIR-Schaumstoffe der Beispiele 5 bis 7 weisen die gleiche vertikale Flammausbreitung auf. Die nach einer bevorzugten Ausführungsform hergestellten PUR-/PIR-Schaumstoffe der Beispiele 5 und 6 zeigen jedoch eine vorteilhaftere Kinetik auf, welche durch das höhere Verhältnis von Startzeit/Steigzeit gekennzeichnet ist.

**Tabelle 3**

| Beispiele | | 9* | 10 |
|---|---|---|---|
| A1-2 | Gew.Tle. | 67,7 | 67,7 |
| A2-1 | Gew.Tle. | 14,6 | 13,4 |
| A3-2 | Gew.Tle. | 1,9 | 2,8 |
| A4-1 | Gew.Tle. | 3,8 | 3,8 |
| A5-2 | Gew.Tle. | 9,5 | 9,5 |
| A5-5 | Gew.Tle. | 14,3 | |
| A5.1-6 | Gew.Tle. | | 14,3 |

(fortgesetzt)

| Beispiele | | | 9* | 10 |
|---|---|---|---|---|
| B1 (Desmodur 44V70L) | Gew.Tle. | | 118 | 96 |
| Kennzahl | | | 320 | 320 |
| Phosphorgehalt (berechnet) | Gew.-%[1] | | 1,6 | 1,5 |
| Phosphonatgehalt (berechnet) | Mol/kg[1] | | 0,31 | 0,31 |
| **Eigenschaften** | | | | |
| Startzeit | s | | 11 | 13 |
| Abbindezeit | s | | 35 | 67 |
| Steigzeit | s | | 60 | 95 |
| Rohdichte | kg/m$^3$ | | 34 | 32 |
| Vertikale Flammausbreitung | cm | | 11 | 9 |
| MARHE | kJ/m$^2$ | | 101 | 97 |
| Maximum der Wärmefreisetzung | kJ/m$^2$ | | 123 | 127 |
| Gesamte Wärmefreisetzung | MJ/m$^2$ | | 11 | 9 |
| Rückstand | Gew.-% | | 46 | 45 |

\* Vergleichsbeispiel
[1] Die Angaben Gew.-% und Mol/kg beziehen sich auf die Gesamtmasse der Komponenten A1 bis B1 = 100 Gew.-%

Die Ergebnisse der Tabellen 3 und 4 zeigen, dass bei dem erfindungsgemäßen Einsatz von acetyliertem Diethylhydroxymethylphosphonat als Komponente **A5.1** (Beispiele 10, 12 und 13) trotz niedrigerer Phosphorgehalte im PUR-/PIR-Schaumstoff ein guter Flammschutz erhalten wird.

**Tabelle 4**

| Beispiel | | 11* | 12 | 13 |
|---|---|---|---|---|
| A1-3 | Gew.Tle. | 86 | 84,3 | 83,9 |
| A5-3 | Gew.Tle. | 7,7 | | |
| A5.1-6 | Gew.Tle. | | 9,4 | 9,8 |
| A4-1 | Gew.Tle. | 2 | 2 | 2 |
| A2-2 | Gew.Tle. | 0,8 | 0,8 | 0,8 |
| A2-3 | Gew.Tle. | 16,7 | 16,7 | 17,4 |
| A3-2 | Gew.Tle. | 2,7 | 2,7 | 2,7 |
| A3-1 | Gew.Tle. | 0,8 | 0,8 | 0,8 |
| Desmodur® 44V20L, | Gew.Tle. | 200 | 200 | 210,5 |
| Index | | 300 | 304 | 321 |
| Phosphorgehalt (berechnet) | Gew.-%[1] | 0,5 | 0,5 | 0,5 |
| Phosphonatgehalt (berechnet) | Mol/kg[1] | 0,15 | 0,15 | 0,15 |
| **Eigenschaften** | | | | |
| Startzeit | s | 11 | 10 | 11 |
| Abbindezeit | s | 35 | 40 | 43 |
| Klebfreizeit | s | 51 | 60 | 66 |
| Rohdichte | kg/m$^3$ | 30,6 | 29,5 | 29,6 |

(fortgesetzt)

| Eigenschaften | | | | |
|---|---|---|---|---|
| Haftung zu Papier nach 5 min[2] | | 5 | 3 | 3 |
| Haftung zu Papier nach 24h[2] | | 4 | 3 | 3 |
| Vertikale Flammausbreitung | cm | 18 | 17 | 16 |
| * Vergleichsbeispiel<br>[1] Die Angaben Gew.-% und Mol/kg bezieht sich auf Gesamtmasse der Komponenten A1 bis B1 = 100 Gew.-%<br>[2]Die Haftung zu Papier wird nach deutschen Schulnoten bewertet von einer dafür ausgebildeten Mitarbeiterin. | | | | |

**Patentansprüche**

1. Verfahren zur Herstellung von PUR-/PIR-Schaumstoffen durch die Umsetzung eines Reaktionsgemisches enthaltend

   **A1** eine Isocyanat-reaktive Komponente
   **A2** Treibmittel
   **A3** Katalysator
   **A4** gegebenenfalls Additiv
   **A5** Flammschutzmittel

   mit

   **B** einer Isocyanatkomponente,

   wobei die Herstellung bei einer Kennzahl von 80 bis 600 erfolgt,
   **dadurch gekennzeichnet, dass** das Flammschutzmittel **A5** eine Komponente **A5.1** enthält, wobei die Komponente **A5.1** mindestens eine Verbindung ausgewählt aus der Gruppe bestehend aus Dibutylhydroxymethylphosphonat, dem Dimer von Dibutylhydroxymethylphosphonat, Butylethylhydroxymethylphosphonat mit einem molaren Verhältnis von Ethyl/Butyl von höchstens 15/85, acetyliertes Dibutylhydroxymethylphosphonat, dem Dimer des acetylierten Dibutylhydroxymethylphosphonat, acetyliertes Diethylhydroxymethylphosphonat und dem Dimer des acetylierten Diethylhydroxymethylphosphonat enthält.

2. Verfahren gemäß Anspruch 1, **dadurch gekennzeichnet, dass** in der Isocyanat-reaktiven Komponente **A1** ein Polyesterpolyol enthalten ist.

3. Verfahren gemäß Anspruch 2, **dadurch gekennzeichnet, dass** das Polyesterpolyol eine OH-Zahl im Bereich von 100 bis 400 mg KOH/g aufweist.

4. Verfahren gemäß einem der Ansprüche 1 bis 3, **dadurch gekennzeichnet, dass** das Treibmittel **A2** ausgewählt ist aus einer oder mehreren Verbindungen der Gruppe bestehend aus halogenfreien chemischen Treibmitteln, halogenfreien physikalischen Treibmitteln und (hydro)fluorierten Olefinen.

5. Verfahren gemäß einem der Ansprüche 1 bis 4, **dadurch gekennzeichnet, dass** das Flammschutzmittel **A5** 30,0 Gew.-% bis 100,0 Gew.-%, bezogen auf die Gesamtmasse des Flammschutzmittels **A5,** der Komponente **A5.1** enthält.

6. Verfahren gemäß einem der Ansprüche 1 bis 5, **dadurch gekennzeichnet, dass** der Anteil der Komponente **A5.1** 0,1 Gew.-% bis 30,0 Gew.-%, bezogen auf die Gesamtmasse der Komponente **A1** = 100 Gew.-%, und bevorzugt 0,04-0,4 mol Phosphonat pro kg Schaumstoff beträgt.

7. Verfahren gemäß einem der Ansprüche 1 bis 6, **dadurch gekennzeichnet, dass** das Flammschutzmittel **A5** kein halogenhaltiges Flammschutzmittel enthält.

8. Verfahren gemäß einem der Ansprüche 1 bis 7, **dadurch gekennzeichnet, dass** die Komponente **A5.1** mittels eines Katalysators, ausgewählt aus mindestens einer Verbindung der Gruppe bestehend aus phosphorhaltigen Basen, Alkalicarbonaten und Aminen, wobei tertiäre Trialkylamine ausgenommen sind, hergestellt wurde.

9. Verfahren gemäß einem der Ansprüche 1 bis 7, **dadurch gekennzeichnet, dass** die Komponente **A5.1** mittels einer phosphorhaltigen Base als Katalysator hergestellt wurde.

10. Verfahren gemäß einem der Ansprüche 1 bis 7, **dadurch gekennzeichnet, dass** die Komponente **A5.1** in Abwesenheit tertiärer Amine und ohne phosphorfreie Lösungsmittel hergestellt wurde.

11. Verfahren gemäß einem der Ansprüche 1 bis 10, **dadurch gekennzeichnet, dass** die die Komponente **A5.1** ausgewählt ist aus mindestens einer Verbindung aus der Gruppe bestehend aus Dibutylhydroxymethylphosphonat, dem Dimer von Dibutylhydroxymethylphosphonat, Butylethylhydroxymethylphosphonat mit einem molaren Verhältnis von Ethyl/Butyl von höchstens 15/85, acetyliertes Dibutylhydroxymethylphosphonat, dem Dimer des acetylierten Dibutylhydroxymethylphosphonat.

12. Verfahren gemäß einem der Ansprüche 1 bis 11, **dadurch gekennzeichnet, dass** die Komponente **A5.1** ausgewählt ist aus einem Gemisch von Dibutylhydroxymethylphosphonat und 0,1 bis 30 Gew.-%, bezogen auf das Gesamtgewicht des eingesetzten Dibutylhydroxymethylphosphonat, des Dimers von Dibutylhydroxymethylphosphonat und/oder ein Gemisch von acetylierten Dibutylhydroxymethylphosphonat und 0,1 bis 30,0 Gew.-%, bezogen auf das Gesamtgewicht des eingesetzten acetylierten Dibutylhydroxymethylphosphonats, des Dimers von des acetylierten Dibutylhydroxymethylphosphonats.

13. Verfahren gemäß Anspruch 1, **dadurch gekennzeichnet, dass** ein Reaktionsgemisch enthaltend

**A1** ein Polyesterpolyol mit einer Hydroxylzahl von 50 mg KOH/g bis 400 mg KOH/g,
**A2** Treibmittel, enthaltend eine Verbindung ausgewählt aus der Gruppe bestehend aus halogenfreien chemischen Treibmitteln, halogenfreien physikalischen Treibmitteln und (hydro)fluorierten Olefinen,
**A3** Katalysator, enthaltend Alkalicarboxylat und/oder Di- oder Trialkylaminomethylphenol,
**A4** Additiv, enthaltend einen Schaumstabilisator,
**A5** Flammschutzmittel, enthaltend Dibutylhydroxymethylphosphonat und gegebenenfalls dessen Dimer,

mit

**B** monomeres und polymeres MDI

umgesetzt wird.

14. PUR-/PIR-Schaumstoff, erhältlich nach dem Verfahren gemäß einem der Ansprüche 1 bis 13.

15. Verwendung von PUR-/PIR-Schaumstoffen nach Anspruch 14 zur Herstellung eines Isolationsmaterials.

# EP 3 719 047 A1

Europäisches Patentamt
European Patent Office
Office européen des brevets

## EUROPÄISCHER RECHERCHENBERICHT

Nummer der Anmeldung

EP 19 16 7527

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2015/352807 A1 (NANDI MALAY [US] ET AL) 10. Dezember 2015 (2015-12-10) * Absätze [0028], [0032] - [0035]; Ansprüche 1-2 * ----- | 1-15 | INV. C08G18/42 C08G18/76 C08J9/00 |
| X | US 2019/092917 A1 (NANDI MALAY [US] ET AL) 28. März 2019 (2019-03-28) * Absätze [0021] - [0029]; Ansprüche 1,6 * ----- | 1-15 | |
| X | US 2015/354211 A1 (NANDI MALAY [US] ET AL) 10. Dezember 2015 (2015-12-10) * Absätze [0025] - [0035]; Ansprüche 1-7 * ----- | 1-15 | |
| | | | **RECHERCHIERTE SACHGEBIETE (IPC)** C08G C08J |

Der vorliegende Recherchenbericht wurde für alle Patentansprüche erstellt

| Recherchenort | Abschlußdatum der Recherche | Prüfer |
|---|---|---|
| München | 4. Oktober 2019 | Buestrich, Ralf |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

 ..............................................................
& : Mitglied der gleichen Patentfamilie, übereinstimmendes Dokument

EPO FORM 1503 03.82 (P04C03)

20

**ANHANG ZUM EUROPÄISCHEN RECHERCHENBERICHT
ÜBER DIE EUROPÄISCHE PATENTANMELDUNG NR.**

EP 19 16 7527

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

04-10-2019

| Im Recherchenbericht angeführtes Patentdokument | Datum der Veröffentlichung | Mitglied(er) der Patentfamilie | Datum der Veröffentlichung |
|---|---|---|---|
| US 2015352807 A1 | 10-12-2015 | US 2015352807 A1<br>WO 2015191384 A1 | 10-12-2015<br>17-12-2015 |
| US 2019092917 A1 | 28-03-2019 | KEINE | |
| US 2015354211 A1 | 10-12-2015 | US 2015354211 A1<br>WO 2015191375 A1 | 10-12-2015<br>17-12-2015 |

EPO FORM P0461

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- DE 4418307 A1
- US 5268393 A
- WO 2006108833 A1
- EP 1142940 A2
- US 2014066532 A1
- US 5470891 A
- US 3385801 A
- WO 2010080425 A
- EP 2910585 A1
- EP 1359177 A1
- WO 2010043624 A
- EP 1923417 A
- US 2764565 A

### In der Beschreibung aufgeführte Nicht-Patentliteratur

- Polyurethane. **G.W. BECKER ; D. BRAUN.** Kunststoff Handbuch. Carl Hanser Verlag, 1983, vol. 2, 104-1, 5
- Recent Advances on the Utilization of Nanoclays and Organophosphorus Compounds in Polyurethane Foams for Increasing Flame Retardancy. **J.C. QUAGLIANO ; V.M. WITTEMBERG ; I.C.G. GARCIA.** Structural Nanocomposites, Engineering Materials. Springer Verlag, 2013, vol. 1, 249-258
- **S.V. LEVCHIK ; E.D. WEIL.** A Review of Recent Progress in Phosphorus-based Flame Retardants. *J. Fire Sci.,* 2006, vol. 24, 345-364
- **M. M VELENCOSO et al.** *Angewandte Chemie Int. Ed.,* 2018, vol. 57, 10450-10467
- **L. CHEN ; Y.-Z. WANG.** A review on flame retardant technology in China. Part 1: development of flame retardants. *Polym. Adv. Technol.,* 2010, vol. 21, 1-26
- **IONESCU.** Chemistry and Technology of Polyols for Polyurethanes. Rapra Technology Limited, 2005, 55 ff
- Oligo-Polyols for Elastic Polyurethanes. 263 ff
- Polyester Polyols for Elastic Polyurethanes. 321 ff
- Polyether Polyols for Rigid Polyurethane Foams. 419 ff
- 6: Polyester Polyols for Rigid Polyurethane Foams
- Kunststoff-Handbuch. Carl Hanser Verlag, 1993, vol. VII, 267 ff
- Polyurethan Taschenbuch. Carl Hanser Verlag, 2001, 83-102